# EUROPÄISCHE PATENTSCHRIFT

(11) **EP 1 284 182 B1**
(45) Veröffentlichungstag und Bekanntmachung des Hinweises auf die Patenterteilung: **26.11.2014**
(21) Anmeldenummer: 02017847.1
(22) Anmeldetag: 08.08.2002
(51) Int. Cl.: B29C 43/18, B29C 43/36, B29C 59/02, B29C 51/14, B29C 51/42, B29C 37/00, B29L 9/00, B29L 31/30

(54) **Verfahren zum Formen von Teilen mit eingeformten Oberflächenstrukturen**
Method for forming parts with structural patterns on its surface
Procédé pour thermoformer des pièces avec des structures à la surface

(30) Priorität: 13.08.2001 US 929693
(43) Veröffentlichungstag der Anmeldung: 19.02.2003
(60) Teilanmeldung: 08012435.7
(73) Patentinhaber: OLBRICH GmbH, 46395 Bocholt (DE)
(72) Erfinder: Spengler, Ernst Maximilian, 63150 Heusenstamm (DE)
(74) Vertreter: Buse, Mentzel, Ludewig Patentanwaltskanzlei

(56) Entgegenhaltungen:
- EP-A- 0 450 482
- EP-A- 0 951 984
- US-A- 4 555 380
- US-A- 6 136 415

## Beschreibung

Die Erfindung betrifft ein Verfahren zum Herstellen von Formteilen wie Innenaustattungsteilen für Kraftfahrzeuge, wobei die Teile eine eingeformte Oberflächenstruktur nach Art einer Prägung, Narbung oder dergleichen aufweisen.

Auf verschiedenen technischen Gebieten und insbesondere bei den Herstellern von Kraftfahrzeugen besteht eine ständig wachsende Nachfrage nach verschiedenen, geformten Bauteilen, die eine Oberflächenstruktur aufweisen, die in oder auf die Oberfläche solcher Teile geformt wird. Beispielsweise werden zunehmend Innenausstattungsteile für Kraftfahrzeuge benötigt wie Dachverkleidungen, Türverkleidungseinsätze, Säulenabdeckungen, Konsolen, Ablagefächer, Armaturenbretter und dergleichen, die eine Oberflächenstruktur wie eine künstliche Ledernarbung, eine künstliche holzähnliche Maserung, ein getüpfeltes, mit Linien versehenes oder ähnliches Muster, vorgetäuschte Nahtlinien, erhabene Vorsprünge, eingeschnittene Vertiefungen oder sogar eingeformten Text oder Logos aufweisen. Eine solche Oberflächenstruktur verbessert das Aussehen der sichtbaren Oberfläche des Formteils oder verbessert die Oberflächeneigenschaften hinsichtlich der Haptik oder der Griffigkeit oder gibt eine gewünschte Information in Form von Text, Logos oder dergleichen.

Aus dem Dokument EP 0 450 482 A2 ist ein Herstellungsverfahren für dünnwandige Formteile aus thermoplastischem Kunststoff unter Verwendung einer von der Heizstation bis in die Formvorrichtung verfahrbaren Heizeinrichtung bekannt. Die meisten großen Formteile werden mit vergleichsweise niedrigen Temperaturen erwärmt, da keine Abkühlung bis zum Verformungsschritt erfolgt. In der gezeigten Formvorrichtung wird aus dem ebenen Werkstück durch Aufeinanderdrücken der Formhälften das Formteil erhalten. Die Dokumente EP 0 951 984 A1 und US 6 136 415 zeigen ein Verfahren zur Herstellung von Formteilen aus mehreren unterschiedlichen Kunststofflagen, nämlich aus einer Dekorschicht, einer Schaumstoffschicht und einer Tragschicht. In einem ersten Verfahrensschritt wird das erwärmte Verbundteil aus der mit der Dekorschicht laminierten Schaumstoffschicht in einer Formpresse geformt. Während dieser Verformung kann in die Dekorschicht auch eine Norbung oder Prägung eingebracht werden. Die Schaumstoffschicht wird vor der Verformung mit einer höheren Temperatur erwärmt als die Dekorschicht. Während des Formvorgangs wird die Dekorschicht zusätzlich gekühlt, um eine Beschädigung derselben zuvor zu kommen. Anschließend wird die erwärmte Tragschicht in die Presse eingebracht und ein weiterer Pressvorgang vorgenommen, um das gewünschte Formteil zu erhalten.

Dementsprechend ist es eine Aufgabe der Erfindung, ein Verfahren zum Herstellen eines Formteiles anzugeben, das eine Oberflächenstruktur aufweist, die genau die angestrebte Oberflächenstruktur ohne Verzerrungen aufweist und keinerlei Beschränkungen bezüglich des Typs der Oberflächenstruktur besitzt, und verwendet werden kann, um synthetische Ledernarbungen, synthetische Holzmaserungen, Muster von Tüpfelungen, und Streifen oder dergleichen, erhabene Vorsprünge, eingezogene Vertiefungen, künstliche Nahtlinien, Text, Logos und dergleichen mit großem Detail, Genauigkeit und Produzierbarkeit herzustellen. Es ist ferner eine Aufgabe der Erfindung, die erstrebte Oberflächenstruktur in die Oberfläche eines Formteils während seiner Formung einzubringen, ohne dass zusätzliche Arbeitsschritte oder Aufwand zur Erzielung dieser Oberflächenstruktur erforderlich sind. Eine weitere Aufgabe der Erfindung besteht in der Verwendung von Materialien für die strukturierte Deckschicht, die auch in Kombination mit im wesentlichen jedem in Betracht kommenden rückseitigem Stützmaterial oder Substrat leicht recycelbar sind. Ferner zielt die Erfindung darauf ab, Nachteile des Standes der Technik zu vermeiden oder zu umgehen sowie zusätzliche Vorteile zu erreichen, wie es sich aus dieser Beschreibung ergibt.

Die vorgenannten Aufgaben werden erfindungsgemäß gelöst durch ein Verfahren mit den Merkmalen des Anspruches 1. Vorteilhafte Weiterbildungen des Verfahrens sind in den Ansprüchen 2 bis 30 aufgeführt.

Es wird eine Deckschicht vorgesehen, die eine die Oberfläche bildende Haut und einen aus Schaumstoff bestehenden Träger aufweist. Die Deckschicht wird so erwärmt, daß die Haut zumindest ihre Schmelztemperatur erreicht, während der aus Schaumstoff bestehende Träger nur auf eine Temperatur unterhalb seines Schmelzpunktes erhitzt wird. Dabei wird im einzelnen das Material für die Haut vollständig in einen viskosen, annähernd flüssigen Zustand geschmolzen, während der aus Schaumstoff bestehende Träger als elastischer Feststoff bestehen bleibt. Der Schaumstoff bildet daher einen festen Träger zum Halten und Tragen eines stark erhitzten, viskosen, nach einem Erkalten die Haut bildenden Materials. In einem gewissen Ausmaß dringt das viskose, annähernd flüssige Material auch in offene Poren in der Oberfläche des Trägers ein oder füllt sie teilweise, etwa so wie eine Flüssigkeit in einen Schwamm eindringen kann. Da jedoch der Träger ein geschlossenzelliger Schaum ist, der über seine Dicke nicht durchlässig ist, ist das Ausmaß der Absorption des viskosen, flüssigen Materials in den Träger auf dessen Berührungsfläche begrenzt. Vorzugsweise ist die Deckschicht ein schaumgestütztes Folienmaterial aus thermoplastischem Polyolefin (TPO). Geeignete Thermoplaste für die Haut umfassen beispielsweise Polypropylen, Polyethylen, Polyvinylchlorid (PVC) und Acrylnitril-Butadien-Styrol (ABS) Polymere.

Die vorerhitzte Deckschicht wird zwischen einer ersten oder oberen Form und einer zweiten oder unteren Form angeordnet. Die Formfläche der oberen Formhälfte wird mit einem exakten, negativen Abbild der gewünschten Oberflächenstruktur des herzustellenden Formteils versehen. Namentlich wird diese Oberflächenstruktur auf der Formoberfläche durch mechanisches Gravieren, Einprägen, chemisches Ätzen oder dergleichen im Anschluß an ein Abschleifen und Feinpolieren der Formoberfläche angebracht. Die Deckschicht wird nach dem Vorwärmen zwischen den Formen angeordnet, worauf die erste oder obere Formhälfte und die zweite Formhälfte gegeneinander geschlossen werden, wobei die zweite Formhälfte vorzugsweise die Deckschicht in Richtung auf die obere Formhälfte mechanisch vorformt. Eine luftdichte Abdichtung ist zwischen der oberen Formhälfte und der zweiten Formhälfte vorgesehen. Ein unter Druck stehendes Druckmedium wird in einen Spalt zwischen der zweiten Formhälfte und den Träger der Deckschicht eingeleitet, wobei das Druckmedium die Deckschicht weiter in Richtung auf und gegen die Obere Formhälfte verformt. Der Raum zwischen der Haut der Deckschicht und der strukturierten Oberfläche der oberen Formhälfte wird entlüftet, und ein leichtes Vakuum wird zwischen der Haut und der strukturierten Oberfläche der oberen Formhälfte aufgebracht.

Auf diese Weise drückt das unter Druck stehende Druckmedium auf die Deckschicht, so daß die Haut in einem zähflüssigen Zustand einheitlich und gleichmäßig in Anlage an die strukturierte Formoberfläche der oberen Formhälfte angedrückt wird und die inverse Struktur in die Haut eingeformt werden kann. Währenddessen stellt ein leichtes Vakuum sicher, daß Luft zwischen der Haut und der strukturierten Formoberfläche entweichen kann und daß die Haut in fester Ausrichtung auf die strukturierte Formoberfläche gehalten wird, was einer Verzerrung oder einem doppelten Eindrücken des Strukturbildes vorbeugt. Da der Träger der Deckschicht aus geschlossenzelligem Schaum besteht, der nicht durchlässig ist und in einem elastischen, festen (nicht geschmolzenen) Zustand verbleibt, besteht keine Gefahr, daß das Druckmedium den Träger beschädigt. Vielmehr wirkt der Träger als Puffer oder Zwischenschicht zum gleichförmigen Aufbringen des Formdruckes auf die Haut und zum gleichmäßigen Andrücken gegen die konturierte und strukturierte Oberfläche der oberen Formhälfte.

Da sich die Haut in einem annähernd geschmolzenen, viskos-flüssigen Zustand befindet, wird das Hautmaterial gegen die strukturierte Oberfläche der oberen Formhälfte ausgeformt, so daß genau die entgegengesetzte oder umgekehrte Struktur der Formoberfläche in die Oberfläche der Haut eingeformt wird. Durch Kühlung der oberen Formhälfte verfestigt sich dann die Haut wieder mit der darin fixierten Oberflächenstruktur. Da die Deckschicht im wesentlichen gleichzeitig mit der Oberflächenstruktur konturiert und eingedruckt wird, besteht keine Gefahr, daß sich die Oberflächenstruktur infolge der Konturierung oder Verformung der Deckschicht verwirft. Vielmehr kann jede Oberflächenstruktur, die auf der konturierten Oberfläche eingraviert, eingeätzt oder auf andere Art hergestellt werden kann, akkurat auf der Hautfolie reproduziert werden.

In einem nachfolgenden Schritt wird die Form geöffnet und die fertiggestellte strukturierte Haut kann für eine weitere, separate Verwendung entnommen werden oder es kann ein Substrat auf die rückseitige Oberfläche des Trägers der Deckschicht direkt in derselben Vorrichtung geformt und laminiert werden. Bei einer bevorzugten Ausführungsform wird eine vorgewärmte Schicht eines Substratmaterials (beispielsweise eine Zusammenstellung aus natürlichen Fasern, Glasfasern oder Polyesterfasern mit thermoplastischen Fasern wie Polypropylenfasern) durch die zweite Formhälfte gegen die Rückfläche des Trägers geformt. Entsprechend einer weiteren Alternative kann ein schäumendes Polymerharz-Material eingespritzt, aufgesprüht, angegossen oder gegen die Rückseite des Trägers eingebracht und dann mittels der zweiten Formhälfte gegen den Träger geformt werden. Beispielsweise kann in diesem Zusammenhang das Substratmaterial ein schäumendes Polyurethan-Material sein. Vorzugsweise sind die obere Formhälfte und die zweiten Formhälfte so zueinander dimensioniert und konfiguriert, daß sie die Deckschicht zwischen sich aufnehmen können und auch einen Spalt im Bereich von 2 bis 5 mm bilden, der als Aufnahmespalt für das Druckmedium während der Anfangsformung der Deckschicht wie vorbeschrieben wirkt und der das Substrat während des nachfolgenden Substratlaminierschrittes aufnimmt und formt.

Das Druckmedium ist vorzugsweise Druckluft mit einem Druck im Bereich von 1 bis 30 bar und insbesondere im Bereich von 5 oder 6 bis 20 bar. Andererseits ist das leichte Vakuum, das von Seiten der oberen Formhälfte aufgebracht wird, wesentlich weniger als 1 bar unterhalb des Atmosphärendrucks und insbesondere weniger als 0,5 bar unter Atmosphärendruck oder sogar weniger als 0,3 bar (beispielsweise 0,05 bis 0,3 bar) unter Atmosphärendruck, und im besonderen etwa 0,1 bar unter Atmosphärendruck.

Der Unterdruck wird durch sehr feine Vakuumbohrungen aufgebracht, beispielsweise lasergebohrte Öffnungen mit einem Durchmesser von weniger als 0,5 mm, insbesondere weniger als 0,3 mm und speziell etwa 0,2 mm, wobei sich diese Öffnungen durch die Oberfläche der oberen Formhälfte erstrecken. Der sehr kleine Durchmesser dieser Vakuumbohrungen gewährleistet in Kombination mit dem aufgebrachten, sehr geringen Unterdruck und der Pufferwirkung des festen Trägers, daß das geschmolzenen Hautmaterial nicht in diese Vakuumbohrungen eingesaugt wird und daß die fertiggestellte Oberfläche der Haut am geformten Teil keine Knötchen oder Punkte auf dem Hautmaterial an den Stellen der Vakuumbohrungen zeigt. Vielmehr ist die fertiggestellte, strukturierte Oberfläche des Formteils eine exakte Reproduktion der Oberflächenstruktur, wie sie auf der oberen Formhälfte vorgesehen ist, ohne irgend eine Verzerrung oder irgend einen Abdruck der Vakuumöffnungen aufzuweisen.

Es ist zweckmässig eine Vorrichtung zu verwenden, die eine erste obere Formhälfte und eine zweite oder untere Formhälfte umfaßt. Die obere Formhälfte hat eine Formfläche, die mit der gewünschten Kontur bearbeitet und dann feinpoliert und danach durch mechanisches Gravieren, Fräsen, Ätzen oder dergleichen mit einer Strukturoberfläche versehen wird.

Die obere Formhälfte umfaßt eine mit einer Vakuumquelle verbundene Vakuumkammer und Vakuumbohrungen, die sich von der Vakuumkammer durch die obere Formhälfte erstrecken. Diese Vakuumbohrungen weisen insbesondere mechanisch gebohrte Abschnitte und lasergebohrte Abschnitte auf, die von den mechanisch gebohrten Abschnitten ausgehend in der Oberfläche der Formhälfte münden. Die lasergebohrten Bohrungsabschnitte haben die zuvor beschriebenen Durchmesser. Sowohl die obere Formhälfte wie die untere Formhälfte werden mittels Kühlwasser oder Kühlöl oder dergleichen temperiert, das durch Kühlkanäle strömt, um die Formen beispielsweise auf einer Temperatur von 50° bis 60° C zu halten. Die exakte Höhe der notwendigen Temperatur hängt von den verwendeten Werkstoffen, der Arbeitsgeschwindigkeit und dem jeweiligen Verfahrensstand ab.

Die zweite oder untere Formhälfte ist der oberen Formhälfte im wesentlichen angepaßt, wobei ein geeigneter Formspalt dazwischen verbleibt, und sie ist gegenüber der oberen Formhälfte bewegbar. Namentlich ist eine der Formen gegenüber der anderen bewegbar oder es sind beide Formen jeweils gegenüber der anderen bewegbar. Die untere Formhälfte weist Verteilungskanäle für das Druckmedium und Bohrungen für das Druckmedium auf, die mit einer Druckmittelquelle wie Druckluft mit einem Druck im Bereich von 1 bis 30 bar verbunden sind. Die Öffnungen der Druckmittelbohrungen sind in allen Flächen der unteren Formfläche vorgesehen, um eine gleichförmige Verteilung des Druckmediums zu gewährleisten. Ein elastisch gelagerter, umlaufender Dichtungsrahmen bildet eine Abdichtung zwischen der oberen Formhälfte und der unteren Formhälfte längs der Peripherie. Der Dichtungsrahmen ist vorzugsweise an der unteren Formhälfte über eine nachgiebige Verbindung wie eine federbelastete Gleitanordnung montiert. Der Dichtungsrahmen kann auch als mechanischer Anschlag wirken, der die Schließbewegung der Formen begrenzt, um zuverlässig den vorerwähnten gewünschten Spalt dazwischen zu erhalten.

Entweder die obere Formhälfte oder die untere Formhälfte können als matrizenartige Form ausgebildet sein, während die entsprechende Gegenform als angepaßte patrizenartige Form ausgebildet ist. In ähnlicher Weise kann entweder die obere Formhälfte oder die untere Formhälfte als Negativform oder die Positivform angesehen werden, und jede dieser Formen kann die Oberform oder die Unterform sein. Vorzugsweise ist die obere Formhälfte die Oberform, während die untere Formhälfte die Unterform ist. Dieser Formanordnung entspricht, daß die Deckschicht mit dem Träger an der Unterseite orientiert ist, die an ihrer Oberseite das geschmolzene Hautmaterial trägt. Dieses ist insbesondere für größere Formteile erforderlich, weil eine Umkehrung dieser Anordnung "Oberseite nach unten" dem geschmolzenen Hautmaterial die Möglichkeit geben würde, von der als Träger wirkenden Schaumpolsterung herab zu strömen oder zu tropfen. Jedoch kann die Anordnung "Oberseite nach unten" mit Erfolg für kleinere zu formende Teile vorgesehen werden.

Die Vorrichtung und das Verfahren arbeiten ferner mit einer Heizeinrichtung, vorzugsweise mit Heizstrahlern beziehungsweise mit Infrarot-Strahlern an der Oberseite zum Erhitzen des oberen Hautmaterials (beispielsweise auf etwa 200° C) durch Infrarot-Wärmestrahlung, und in einer bevorzugten Ausführungsform mit einer flüssigkeitsgekühlten Temperierplatte aus Metall an der Unterseite, um das Trägermaterial zu unterstützen und auf einer niedrigeren Temperatur (beispielsweise etwa 100°-140° C) zu halten. Die Angabe "etwa" unter Bezugnahme auf Temperaturen bedeutet hier +/- 5° C., soweit sich keine anderweitige Aufgabe findet. Die Deckschicht wird von einem Spannrahmen, einem Klemmrahmen, einem Tuchrahmen oder dergleichen getragen. Dieser Rahmen kann die Deckschicht beziehungsweise ihre Lagen in die Heizeinrichtung und dann von dort in die Vorrichtung zum Herstellen der Formteile tragen. Grundsätzlich kann aber auch eine andere Trageeinrichtung die Lagen in die Heizeinrichtung transportieren.

Zum deutlicheren Verständnis der Erfindung wird diese nachfolgend im Zusammenhang mit Ausführungsbeispielen unter Bezugnahme auf die beigefügten Zeichnungen beschrieben. Es zeigen:
- Fig. 1:: schematisch einen Schnitt durch eine Heizeinrichtung und eine Vorrichtung zur Herstellen der Formteile sowie zur Durchführung des Verfahrens gemäß der Erfindung;
- Fig. 2:: schematisch einen Schnitt durch die Vorrichtung gemäß Fig. 1 nach dem Schließen der Formhälften, wenn Druckluft durch die eine Formhälfte und Vakuum durch die andere Formhälfte auf die Deckschicht aufgebracht werden, wobei die Deckschicht zwischen den beiden Formhälften geformt wird;
- Fig. 3:: schematisch einen Schnitt durch die Vorrichtung entsprechend Fig. 2 während eines weiteren Verfahrensschrittes, bei dem ein Substrat geformt und auf die Rückseite der geformten Deckschicht laminiert wird;
- Fig. 4:: schematisch sowie im größerem Maßstab einen Schnitt durch die zwischen den beiden Formhälften befindliche Deckschicht;
- Fig. 5:: schematisch einen Schnitt ähnlich dem gemäß Fig. 4 durch die umgeformte Deckschicht gemäß einem weiteren Verfahrensschritt, in dem ein Substrat auf die Rückseite der Deckschicht laminiert wird;
- Fig. 6:: schematisch sowie zum Teil im Schnitt eine Ansicht einer abgewandelten Heizeinrichtung vor Beginn des Heizvorganges;
- Fig. 7:: einen Schnitt wie in Fig. 6 während des Aufheizens der Deckschicht und
- Fig. 8:: eine Prinzipskizze von wesentlichen Merkmalen der Heizeinrichtung in Draufsicht.

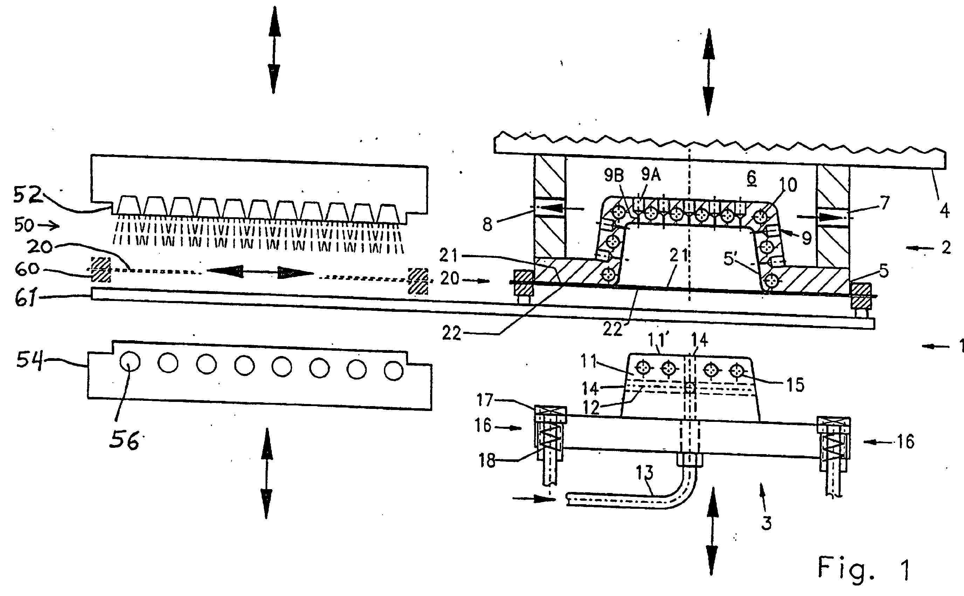

Eine Anlage gemäß Fig. 1 umfaßt eine Vorrichtung 1 zum Herstellen von Formteilen mit einer Heizeinrichtung 50 sowie einem Transferwagen für eine Deckschicht. Der Transferwagen besteht in erster Linie aus einem Spannrahmen 60, der die aus zwei bereits miteinander verbundenen Lagen oder aus zwei zunächst nur aufeinaderliegenden Lagen bestehende Deckschicht 20 hält und trägt. Die Deckschicht 20 umfaßt eine Haut 21 auf einem als Träger 22 dienenden Schaumstoff. Der Spannrahmen 60 bewegt sich längs Schienen 61 bis in die Heizeinrichtung 50. Er hält die Deckschicht 20 während sie in der Heizeinrichtung 50 erhitzt wird und auf der Temperierplatte 54 liegt. Dann bewegt sich der Spannrahmen längs der Schienen 61, um die erhitzte Deckschicht 20 in die Vorrichtung 1 zu transportieren.

Die Heizeinrichtung 50 umfaßt Heizstrahler beziehungsweise eine Infrarotstrahleranordnung 52, die oberhalb der Ebene des Spannrahmens 60 angeordnet ist. Sie umfaßt ferner eine Temperierplatte 54, die während des Heizvorganges in der Ebene des Spannrahmens 60 angeordnet ist. Die Temperierplatte 54 ist beispielsweise eine Metallplatte, die mittels Flüssigkeit in Kanälen (56) derart temperiert wird, daß der Träger (22) die erwünschte Temperatur erreicht. Die Infrarotstrahleranordnung 52 und/oder die Temperierplatte 54 sind jeweils in vertikaler Richtung zu der Ebene des Spannrahmens 60 hin und von diesem weg bewegbar, wie es durch Doppelpfeile angedeutet ist. Hierzu dienen grundsätzlich bekannte, in Fig. 1 nicht dargestellte Einrichtungen wie hydraulische oder pneumatische Zylinder.

Die Haut (21) der Deckschicht (20) wird in der Heizeinrichtung derart stark erwärmt, daß sie teigig beziehungsweise zähflüssig oder sogar schmelzflüssig wird. Der Grad der Viskosität wird in Abhängigkeit von dem Werkstoff derart gewählt, daß eine Oberflächenstruktur 21' in einem nachfolgenden Arbeitsschritt ein gepreßt beziehungsweise eingeprägt und dann durch Abkühlung fixiert werden kann. Während des Erhitzens liegt die Haut 21 entweder auf der als Träger (22) dienenden Schaumstoffschicht oder eine Schaumstoffmatte bildet die Unterseite der Haut 21. Als Werkstoff für den Schaumstoff dient zum Beispiel ein chemisch vernetztes Polyurethan. Durch die chemische Vernetzung besitzt dieser Werkstoff nahezu duroplastische Eigenschaften und ist in der Lage, hohen Temperaturen stand zu halten, so daß er sogar noch deutlich über 200° C beständig ist.

Auf der Schaumstoffmatte liegend beziehungsweise zusammen mit der Schaumstoffmatte wird dann die zum Beispiel aus Polyethylen bestehende Haut 21 in eine geöffnete, aus Oberform und Unterform bestehende Vorrichtung zum Verformen transportiert.

Die Vorrichtung 1 umfaßt ein Formwerkzeug 2 zur Bildung einer Vorderseite und ein Formwerkzeug 3 zur Bildung einer Rückseite eines Produktes und insbesondere der Deckschicht 20 beziehungsweise eines Formteiles 40. Bei dem dargestellten Ausführungsbeispiel ist das Formwerkzeug 2 eine matrizenförmige Oberform, die von einer Kopfplatte oder einem Träger 4 getragen wird, während das Formwerkzeug 3 eine patrizenartige Unterform ist. Entweder eines von beiden oder beide Formwerkzeuge 2 und 3 ist/sind in vertikaler Richtung relativ zueinander bewegbar, wie es schematisch durch Doppelpfeile angedeutet ist.

Die Relativbewegung zwischen den Formen kann mit irgendeinem bekannten Mechaninsmus erreicht werden, wozu hydraulische Zylinder, pneumatische Zylinder, mechanische Antriebe wie Spindelantriebe und dergleichen zählen.

Alternativ kann entweder das Formwerkzeug 2 oder das Formwerkzeug 3 die Oberform oder die Unterform sowie die patrizenartige Form oder die matrizenartige Form sein. Generell ist jedoch vorzugsweise das Formwerkzeug 2 die Oberform.

Das Formwerkzeug 2 umfaßt eine obere Formhälfte 5 mit einer Oberfläche 5', die bearbeitet, poliert und mit einer Oberflächenstruktur durch Eingravieren, Ätzen oder dergleichen versehen wird, wie es zuvor beschrieben wurde. Diese Oberflächenstruktur ist an einem oder mehreren ausgewählten Flächenbereichen oder an der Gesamtheit der Oberfläche 5' vorgesehen.

Die Formhälfte 5 ist vorzugsweise eine massive Stahlform, die sich einfach herstellen, bearbeiten, polieren und gravieren oder ätzen läßt, und zwar mittels bekannter Formgebungs- und Metallbearbeitungstechniken. Eine solche Stahlform bietet eine hohe Eigenfestigkeit, eine lange nutzbare Lebensdauer und erlaubt das Vorsehen eines großen Bereichs von unterschiedlichen Oberflächenstrukturen in ihrer Oberfläche 5'. Alternativ kann die obere Formhälfte 5 eine galvanisch hergestellte Zinkformfläche sein, die sich schneller und billiger herstellen läßt (beispielsweise für Formungsserien mit einer kleineren Anzahl von zu formenden Teilen), aber eine kürzere nutzbare Lebensdauer hat. Solch eine galvanisch produzierte Zinkform kann mittels chemischer Ätzung oder einem Bearbeitungsverfahren perforiert oder porös gemacht werden, um ein durchgehendes Saugvakuum aufzubringen.

Das Formwerkzeug 2 schließt einen Vakuumraum oder eine Vakuumkammer 6 mit wenigstens einem Vakuumkanal 7 ein, der mit einer geeigneten Vakuumquelle (nicht dargestellt) verbunden ist, die dafür ausgelegt ist, ein leichtes Vakuum zu erzeugen, beispielsweise von 0,1 bar unterhalb des Atmosphärendrucks. Der Vakuumkanal 7 kann auch als passiver Lüftungskanal dienen oder aber es kann das Formwerkzeug 2 gegebenenfalls zusätzlich einen Entlüftungskanal 8 aufweisen.

Eine Mehrzahl von Öffnungen zum Erzeugen eines Unterdruckes umfaßt Vakuumbohrungen 9, die sich durch die obere Formhälfte 5 erstrecken. Sie stehen mit der Vakuumkammer 6 in Verbindung und erstrecken sich durch die Oberfläche 5'. Jede dieser Vakuumbohrungen 9 in einer massiven Formhälfte 5' aus Stahl besteht aus einem mechanisch gebohrten Bohrungsabschnitt 9A und einem lasergebohrten Bohrungsabschnitt 9B.

Der mechanisch gebohrte Bohrungsabschnitt 9A kann irgendeinen geeigneten Durchmesser, beispielsweise 3 bis 5 mm, aufweisen, während der lasergebohrte Bohrungsabschnitt 9B einen sehr feinen Durchmesser, beispielsweise weniger als 0,5 mm, oder speziell weniger als 0,3 mm, und im Einzelfall etwa 0,2 mm aufweist.

Es sei bemerkt, daß die Abmessungen der Vakuumbohrungen 9 in den schematischen Figuren zwecks deutlicherer Darstellung signifikant übertrieben dargestellt sind.

Eine solche kombinierte Struktur der Vakuumbohrungen 9 kombiniert in effizienter Weise die Vorteile eines schnellen und ökonomischen mechanischen Bohrens mit den Vorteilen einer durch Laserbohren hergestellten Bohrung von kleinem Durchmesser.

Der Durchmesser des lasergebohrten Bohrungsabschnitts 9B ist so ausgewählt, daß das geschmolzene Hautmaterial gehindert ist, in diese Vakuumbohrungen 9 einzuströmen oder eingesaugt zu werden, um die Bildung von unerwünschten Knötchen und Punkten oder sonstigen Fehlstellen auf der fertiggestellten Oberfläche des Formteils zu vermeiden. Alternativ können bei einer galvanisch hergestellten oberen Formhälfte 5 aus Zink die Vakuumbohrungen 9 auf chemischem Wege mit dem erforderlichen kleinen Durchmesser durch die Form hindurch ausgebildet oder geätzt werden. Die zahlreichen Vakuumbohrungen 9 sind verteilt und in einem Muster angeordnet, beispielsweise in Abständen von 30 bis 40 mm voneinander quer über die gesamte relevante Oberfläche 5', auf die ein Vakuum aufgebracht wird, um eine gleichmäßige Aufbringung des Vakuums und die Entlüftung und Entfernung irgendwelcher eingeschlossener Abluft zu gewährleisten.

Die Formhälfte 5 enthält ferner Kühlkanäle 10, durch die eine Temperierflüssigkeit wie Wasser oder Öl strömen kann, um die Formhälfte 5 auf eine konstante und gleichmäßige Temperatur zu temperieren, die geeignet ist, das geformte Teil mit geeigneter Geschwindigkeit zu kühlen und zu verfestigen, beispielsweise eine Formtemperatur im Bereich von 45 bis 60° C und speziell etwa 50° C. Das Formwerkzeug 3 umfaßt eine zweite Formhälfte 11 mit einer zweiten Oberfläche 11', die allgemein so konfiguriert ist, daß sie zur oberen Formhälfte 5 paßt, wobei ein geeigneter Spalt (beispielsweise etwa 4 mm) dazwischen verbleibt, wie es nachfolgend beschrieben wird. Das Formwerkzeug 3 ist mit einem Luftraum oder einem Luftkanal 12 versehen, der mit einer Luftleitung 13 verbunden ist und mit Luftlöchern 14 in verschiedenen Ebenen oder Abschnitten seiner Oberfläche 11' mündet.

Die Leitung 13 kann mit einer Druckluftquelle für zum Beispiel zunächst 100° C heiße Luft oder mit einem anderen Druckmedium wie Dampf, einem anderen Gas oder einer Flüssigkeit bei einem Druck von 1 bis 30 bar, im einzelnen von 6 bis 30 bar und speziell von 5 bis 20 bar, verbunden werden. Die Luftlöcher 14 können von mechanisch gebohrten Löchern geeigneten Durchmessers gebildet sein und sind über die Oberfläche 11' der Unterform beziehungsweise der unteren Formhälfte 11 verteilt, um eine gleichförmige Verteilung der Druckluft oder des anderen Druckmediums im Formverfahren zu gewährleisten.

Alternativ können die Luftlöcher 14 mechanisch gebohrte Abschnitte und lasergebohrte Abschnitte aufweisen, wie es bei den Vakuumbohrungen 9 in der oberen Formhälfte 5 beziehungsweise Oberform 5 der Fall ist.

Eine solche Ausgestaltung erlaubt das Aufbringen entweder eines Druckmediums oder eines Vakuums über die Luftleitung 13 und dann durch die Luftlöcher 14. Die Vorrichtung kann in einer ersten Formstufe mit Vakuum betrieben werden, das durch die obere Formhälfte 5 aufgebracht wird, und mit Druck, der durch die untere Formhälfte 11 aufgebracht wird, um zwei sich auf entgegengesetzten Seiten eines

Substrats befindliche Deckschichten zu formen und zusammen zu laminieren, wobei die Haut der Deckschichten auf beiden gegenüberliegenden Seiten des Formteiles entsprechend der Erfindung mit einer Oberflächenstruktur versehen werden. In einem solchen Fall ist auch die Oberfläche 11' ähnlich wie die Oberfläche 5' mit einer Oberflächenstruktur versehen.

Ebenso wie die Formhälfte 5 ist auch die Formhälfte 11 mit Kühlkanälen 15 versehen, durch die eine Temperierflüssigkeit umgewälzt werden kann, um die Formhälfte 11 auf einer gleichmäßigen und konstanten Temperatur zu halten, die beispielsweise im Bereich von 45° bis 60° C liegt.

Die Vorrichtung 1 weist ferner einen längs der Peripherie umlaufenden Dichtungsrahmen 16 auf, der zur Erzielung einer luftdichten Hochdruckabdichtung zwischen der unteren Formhälfte 11 und der oberen Formhälfte 5 längs ihres Umfangs dient, um ein unter Druck stehendes Druckmedium im Formenspalt zu halten, wie es nachfolgend beschrieben wird.

Diese Dichtung wird während des Formens der Deckschicht 20 und auch in einem späteren Schritt des zweiten Formhälfteens und Laminierens eines Substratmaterials 30 auf die Deckschicht wie nachfolgend beschrieben errichtet und aufrecht erhalten. Insbesondere ist der Dichtungsrahmen 16 vorzugsweise elastisch nachgiebig an der Formhälfte 3 beziehungsweise an der Unterform 3 montiert, so daß er sich mit diesem in Richtung auf die Formhälfte 2 bewegt, bis ein Dichtglied 17 gegen die Deckschicht drückt und abdichtet (wie es nachfolgend beschrieben wird).

Dann liefert eine elastische Federungseinrichtung 18 wie eine Feder, ein pneumatischer Zylinder oder dergleichen eine Sollkraft, um das Dichtglied 17 fest gegen die obere Formhälfte 5/Oberform zu halten, wobei die Deckschicht dazwischen eingeschlossen ist. Der Dichtungsrahmen 16 kann so ausgebildet sein, daß der den Spannrahmen 60 aufnimmt oder mit diesem zusammenarbeitet, um die erforderliche luftdichte Abdichtung zu erreichen.

Ein Beispiel für das erfindungsgemäße Formverfahren wird nun unter Bezugnahme auf die Fig. beschrieben. Fig. 1 zeigt eine Anfangsstufe beim Betreiben der Vorrichtung 1.

Eine Deckschicht 20 mit einem Haut 21 und einem Träger 22 wurde in der Heizeinrichtung 50 erhitzt (wie es durch gestrichelte Linien angedeutet ist) und dann mit mittels des Spannrahmens 60 längs einer flachen horizontalen Ebene transportiert, nämlich längs der Schienen 61, um zwischen der Formhälfte 5 und der Formhälfte 11 positioniert zu werden.

Wie Fig. 1 im einzelnen zeigt, wird die Deckschicht 20 an ihren Umfangskanten durch den Spannrahmen 60 (oder irgendein anderes bekanntes Mittel, oder die erhitzte Deckschicht 20 kann einfach auf die zweite Formhälfte 11 gelegt werden) getragen und gehalten. Die Haut 21 ist ein thermoplastischer Film, und der Träger 22 ist ein geschlossenzelliger oder im wesentlichen geschlossenzelliger Polymerschaum, der vorzugsweise über seine Dicke luftundurchlässig ist.

Bevorzugt ist die Deckschicht 20 eine übliche bekannte rückseitig beschäumte Folie aus thermoplastischem Polyolefin (TPO). Im besonderen ist der Haut 21 vorzugsweise ein Polypropylenfilm oder ein Polyethylenfilm, jedoch kann es sich alternativ auch um einen Film aus Polyvinylchlorid handeln. Der Träger 22 kann aus dem gleichen Polymermaterial wie der Haut 21 (beispielsweise Polypropylen) jedoch in geschäumten Zustand bestehen, oder es kann ein unterschiedliches Polymermaterial (beispielsweise Polyurethan) sein, das vorzugsweise einen höheren Schmelzpunkt als denjenigen der Haut 21 hat (oder keine aktuelle Schmelztemperatur infolge der Querverbindung).

Eine bevorzugte generelle Kombination ist eine schmelzbare thermoplastische Haut 21 auf einem nicht schmelzenden, wärmegehärteten oder bei höherer Temperatur schmelzenden thermoplastischen Träger 22.

Bei der in Fig. 1 gezeigten Stufe wurde die Deckschicht 20 mittels einer Heizeinrichtung vorerhitzt, beispielsweise mittels der dargestellten Infrarotstrahleranordnung 52, um die Haut 21 zu erwärmen (beispielsweise auf etwa 200° C), während der Träger 22 auf der Temperierplatte 54 aufliegt, so daß der Träger relativ kalt gehalten wird (beispielsweise unter etwa 160°C oder speziell auf etwa 140°C oder weniger), so daß er nicht schmilzt. Jedenfalls wurde die Deckschicht 20 so erhitzt, daß die Haut 21 wenigstens ihre Schmelztemperatur erreicht (und mit genügend Restwärme, so daß sie geschmolzen bleibt, bis sie im nachfolgenden Schritt geformt wird), während der Träger 22 eine Temperatur erreicht, bei der er formbar ist, wobei aber die Temperatur unter der Schmelztemperatur des Trägers liegt.

Die Haut 21 wurde im wesentlichen oder vollständig in einen zähflüssigen Zustand geschmolzen, so daß sie gleichförmig auf dem Träger 22 haften bleibt und von ihm getragen werden kann, der seinen festen, formbaren Schaumzustand beibehält. Insbesondere ist der Träger 22 nicht in einen Zustand erweicht, in dem er unfähig ist, Spannung und Unterstützung für das geschmolzene Material der Haut 21 zu bieten. Im Hinblick auf den geschmolzenen viskosen flüssigen Zustand der Haut 21 ist die Deckschicht 20 vorzugsweise wie dargestellt orientiert, wobei die Haut 21 an der Oberseite des einen Boden bildenden Trägers 22 angeordnet ist. Die geschmolzene Haut kann daher nicht vom Träger 22 abtropfen oder ablaufen.

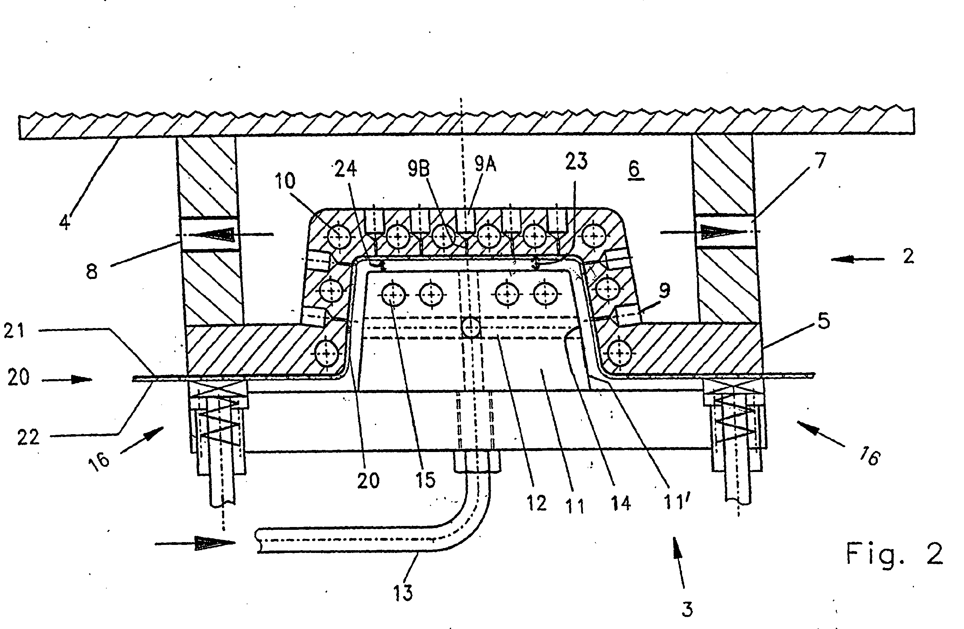

Nachdem die erhitzte Deckschicht 20 wie in Fig. 1 dargestellt zwischen der Formhälfte 5 und der Formhälfte 11 angeordnet wurde, wird die Formhälfte 11 aufwärts bewegt und/oder wird die Formhälfte 2 abwärts bewegt, so daß die Formhälfte 11 beziehungsweise ihre Oberfläche 11' die Deckschicht 20 relativ zur Oberfläche 5' der Formhälfte 5 in eine geformte Kontur verformt, wie es im wesentlichen Fig. 2 zeigt. Die Formhälfte 11 greift an dem etwas kühleren, nicht geschmolzenen Träger 22 an und führt in einem ersten Arbeitsgang einen Tiefziehschritt aus. Dabei wird die geschmolzene Haut 21 gegebenenfalls bereits gegen die strukturierte Oberfläche 5' gedrückt. Ferner wird der Dichtungsrahmen 16 gegen die Formhälfte 5 gedrückt und bildet eine luftdichte Abdichtung längs des Umfanges der Deckschicht 20. Während dieses Tiefziehschrittes kann die Luft passiv aus dem Raum zwischen der Deckschicht 20 und der Oberfläche 5' durch die Vakuumbohrungen 9 und durch den Vakuumkanal 7 oder den Entlüftungskanal 8 entweichen. Es ist nicht notwendig, aber wahlweise möglich, in dieser Stufe ein Vakuum durch den Vakuumkanal 7 aufzubringen. Es wird bevorzugt in dieser Stufe noch kein Vakuum erzeugt, um den Enerigieaufwand im Hinblick auf das ziemlich große Luftvolumen zu reduzieren.

Wie in Fig. 2 dargestellt, hat sich die Formhälfte 3 aufwärts in eine Endstellung gegenüber der Formhälfte 2 bewegt, wobei ein definierter Formspalt 23 zwischen der Oberfläche 5' und der Oberfläche 11' verbleibt. Dieser Formspalt 23 wird durch den umlaufenden Dichtungsrahmen 16 oder ein anderes Element gesichert, das als Anschlag für die Bewegung der Formhälfte 11 gegenüber der Formhälfte 5 wirkt.

Der Formspalt 23 hat eine Doppelfunktion und Abmessungen deart, daß er in der Lage ist, um die Deckschicht 20 aufzunehmen und einen Luftspalt 24 zwischen den beiden Oberflächen 5' und 11' zu bilden.

Der Luftspalt 24 ist vorzugsweise so bemessen (beispielsweise 4 mm), daß er der Stärke des Substrates entspricht, das in einem anderen Schritt angeformt wird, wie dies später beschrieben wird.

Bei dem in Fig. 2 gezeigten Verfahrensschritt hatten sich die Dichtelemente 17 des umlaufenden Dichtungsrahmens 16 an den Rand des Trägers 22 angelegt, um eine wirksame Abdichtung gegen hohen Druck zu bilden, wobei die Dichtelemente die Deckschicht 20 gegen einen Rand der oberen Formhälfte 5 drücken. Die elastisch nachgiebige Federungseinrichtung 18 hält wie eine Feder den vorgegebenen Dichtungsdruck beziehungsweise die Dichtkraft aufrecht. Dann wird ein Druckmedium, vorzugsweise Druckluft, durch die Luftleitung 13, den Luftkanal 12 und die Luftlöcher 14 in den Luftspalt 24 mit einem signifikanten Druck (beispielsweise 6 bis 30 bar) eingeleitet.

Zwischenzeitlich entweicht jegliche verbliebene Luft, die zwischen der Haut 21 und der Oberfläche 5' der oberen Formhälfte eingeschlossen war, passiv durch die Vakuumbohrungen 9 in die Vakuumkammer 6. Gleichzeitig oder geringfügig später kann ein leichtes Vakuum beziehungsweise ein Unterdruck durch den Vakuumkanal 7 aufgebracht werden, um verbliebene Luftblasen zu entfernen und gleichzeitig einen Unterdruck durch die Vakuumbohrungen 9 auf der Haut 21 aufzubringen.

Dabei drückt das Druckmedium gleichförmig gegen den Träger 22, und es wird die Endformung der Deckschicht 20 gegen die Oberfläche 5' mittels einer rein pneumatischen Blasformung erreicht, vorzugsweise ohne direkten mechanischen Formkontakt zwischen der Oberfläche 11' und der Deckschicht 20 bei diesem Verfahrensschritt. Das Ergebnis ist ein sehr gleichförmiges und konturangepaßtes Formen der Deckschicht gegen die Oberfläche 5', was jegliche Toleranzen oder Abweichungen oder dergleichen zwischen den beiden Formen ausgleicht. Da der Träger 22 nicht (oder im Wesentlichen nicht) luftdurchlässig ist, wirkt er als Puffer oder Zwischenschicht und verteilt den Formdruck gleichförmig auf die Haut 21. Dabei wird die geschmolzene Haut gleichmäßig gegen die strukturierte Oberfläche 5' gedrückt und geformt. Gleichzeitig oder kurz danach stellt der Unterdruck, der durch die Vakuumbohrungen 9 aufgebracht werden kann, sicher, daß keine zwischen der Haut 21 und der Oberfläche 5' eingeschlossenen Lufttaschen verbleiben, wobei die Haut 21 fest in einer vorgegebenen, ausgerichteten Stellung gegenüber der Oberfläche 5' gehalten wird.

Dieses gewährleistet, daß sich die Haut 21 nicht gegenüber der Oberfläche 5' verlagert, sobald sie mit ihr in Berührung gekommen ist. Dieses wiederum verhindert die Bildung von Verzerrungen oder "doppelten Abbildungen" der Oberfläche 5' auf der Haut 21.

Wie vorstehend erwähnt wurde die Deckschicht 20 mit der im wesentlichen geschmolzenen Haut 21 in viskos-flüssigem Zustand und bei einer Temperatur oberhalb ihres Schmelzpunktes in der Vorrichtung 1 angeordnet.

Da die Deckschicht 20 gegen die strukturierte Oberfläche 5' durch Druck verformt wird, ergibt sich dementsprechend ein exakt umgekehrtes oder inverses Muster der Struktur in der geschmolzenen Haut 21. Da die geschmolzene Haut 21 in Berührung mit der Formhälfte 5 ist, (die mittels der durch die Kühlkanäle 10 strömenden Kühlflüssigkeit auf eine Temperatur von etwa 50° C temperiert wird), beginnt sich das geschmolzene Material der Haut 21 abzukühlen und dann zu verfestigen, wenn es unter die Schmelztemperatur abgekühlt ist.

Dadurch wird die sich ergebende Kontur und die Oberflächenstruktur der Haut 21 "eingefroren" beziehungsweise fixiert. Gleichzeitig wird der vorerwärmte Träger 22 durch die temperierte Formhälfte 11 abgekühlt, so daß er steifer wird und die geformte Kontur aufrecht erhält.

Daraufhin wird die Zufuhr von Druckmedium durch die Luftleitung 13 unterbrochen, während die Beaufschlagung mit Unterdruck durch den Vakuumkanal 7 und die Vakuumbohrungen 9 vorzugsweise fortgeführt wird, um die geformte Deckschicht 20 in einer festen Stellung in der Formhälfte 5 zu halten. Gleichzeitig setzt sich die Abkühlung und Erstarrung der Deckschicht 20 fort. Dann wird die Vorrichtung 1 geöffnet, wozu die Formhälfte 11 abwärts und/oder die Formhälfte 5 aufwärts bewegt wird. Zu diesem Zeitpunkt kann die fertig gestellte, geformte und strukturierte Deckschicht 20 entnommen und sie kann später in einem separaten Verfahren als Deckhaut auf ein gewünschtes Substrat oder Teil aufgesetzt werden. Alternativ kann in dieser Stufe die Deckschicht 20 auch weiterhin durch Unterdruck an der Formhälfte 5 gehalten werden, und ein Substrat 30 kann direkt auf die Rückseite der vorgeformten Deckschicht 20 in derselben Vorrichtung 1 aufgeformt werden.

Zur Durchführung dieses Schrittes wird das Substratmaterial 30 zwischen der Formhälfte 11 und der Formhälfte 5, namentlich zwischen der Formhälfte 11 und den Träger 22 der Deckschicht 20 eingeführt. Dieses Substratmaterial 30 ist vorzugsweise eine vorgewärmte Schicht aus einem Verbundmaterial von Polyolefinfasern, beispielsweise Polypropylenfasern und natürlichen Fasern oder Glasfasern oder Polyesterfasern oder dergleichen, oder es kann ein Polyurethanschaum vorgesehen sein, der mit Hilfe bekannter Mittel vorgewärmt wurde und der mit bekannten Mitteln in die Vorrichtung getragen oder in ihr angeordnet wird.

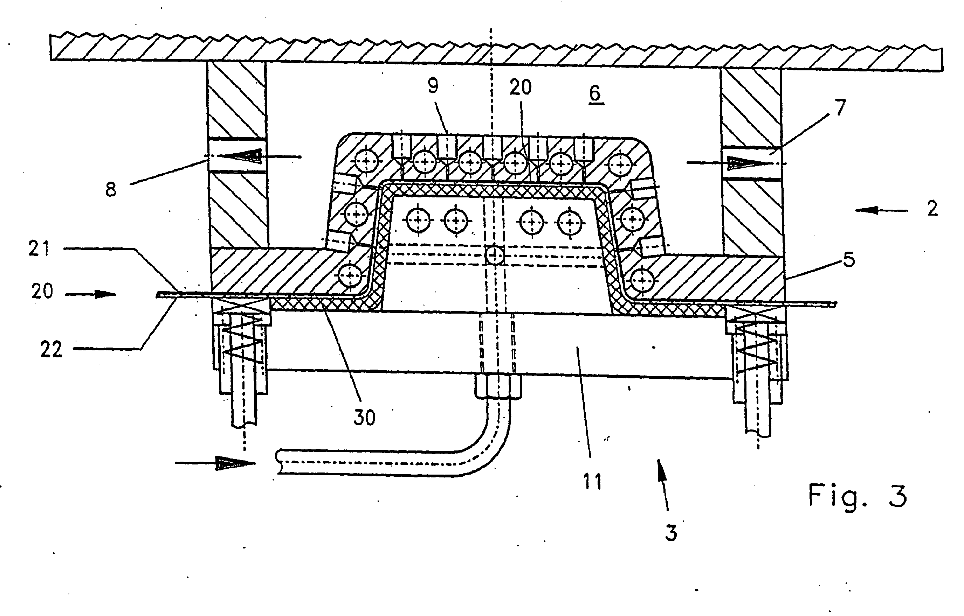

Wie in Fig. 3 gezeigt, ist die Vorrichtung 1 geschlossen, wobei das Formwerkzeug 3 für eine Rückseite aufwärts und/oder das Formwerkzeug 2 abwärts bewegt wurde, so daß die Formhälfte 11 das Substrat 30 gegen die Rückseite des Trägers 22 der zuvor geformten Deckschicht 20 drückt und formt.

In dieser Stufe kann das Formen vollständig mechanisch durchgeführt werden, also ohne daß ein durch die Luftleitung 13 zugeführtes Druckmedium erforderlich ist, aber alternativ ist es von Vorteil, wiederum ein Druckmedium durch die Luftleitung 13 einzuführen, um einen gleichförmigen Formdruck auf das Substrat 30 aufzubringen, was eine Anpassung oder einen Ausgleich für irgendwelche Abweichungen oder Toleranzen bei den Formkonturen führt. Der Dichtungsrahmen 16 hält die luftdichte Abdichtung ringsum am Umfang der geformten Anordnung aufrecht. Die vorgewärmten und wenigstens teilweise geschmolzenen Polyolefinfasern des Substrats 30 erfahren eine Schmelzverklebung mit dem noch warmen oder noch heißen Träger 22 der Deckschicht 20, so daß das Substrat 30 integral mit der Deckschicht 20 verbunden wird, ohne daß irgendein zwischenliegender Klebstoff oder dergleichen erforderlich ist. Ferner wurde das Substrat 30 mechanisch in die erforderliche dreidimensional konturierte Konfiguration geformt und verformt, während das Substratmaterial 30 nun den Teil des Formspalts 23 einnimmt, der zuvor der Luftspalt 24 in der Formgebungsstufe gemäß Fig. 2 war.

Auf diese Weise kann das gesamte Formungsverfahren mit seinen Schrittfolgen zum Formen und Aufbringen einer Oberflächenstruktur auf die Deckschicht 20 und dann das Formen und Laminieren des Substrats 30 auf die Deckschicht 20 mit einem einzigen Satz von Formwerkzeugen in einer einzigen Vorrichtung 1 durchgeführt werden, und zwar in zwei aufeinander folgenden Formungsstufen, ohne daß irgendeine Neuausrichtung oder Umpositionierung der Formen oder sonstiger Ausrüstungsteile erforderlich wird und ohne daß das geformte Teil für irgendeinen erforderlichen Verfahrensschritt zu einer anderen Vorrichtung bewegt werden muß.

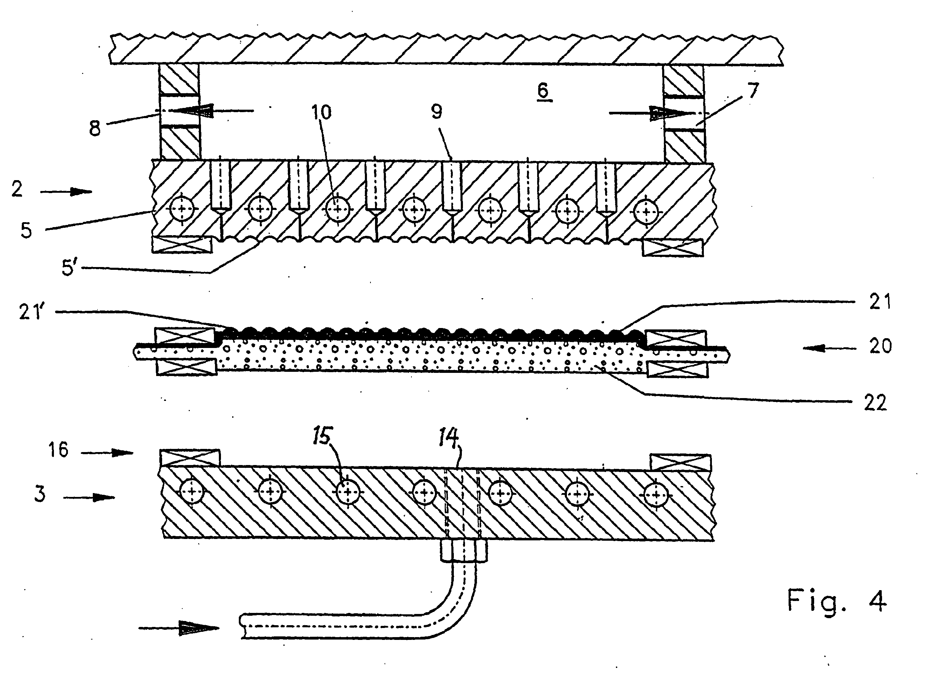

Zur Verdeutlichung zeigt Fig. 4 schematisch das vergrößerte Ergebnis der gemäß Fig. 2 durchgeführten ersten Formstufe. Namentlich sind sowohl die Oberflächenstruktur der Oberfläche 5' als auch die sich ergebende Oberflächenstruktur 21' der Haut 21 der Deckschicht 20 vergrößert dargestellt, um eindeutig zu veranschaulichen, daß die sich ergebende Oberflächenstruktur 21' der Haut 21 das exakte unverzerrte Negativabild oder die Umkehrung der Oberflächenstruktur ist, die in die Oberfläche 5' der Formhälfte 5 eingeprägt beziehungsweise eingedrückt wurde.

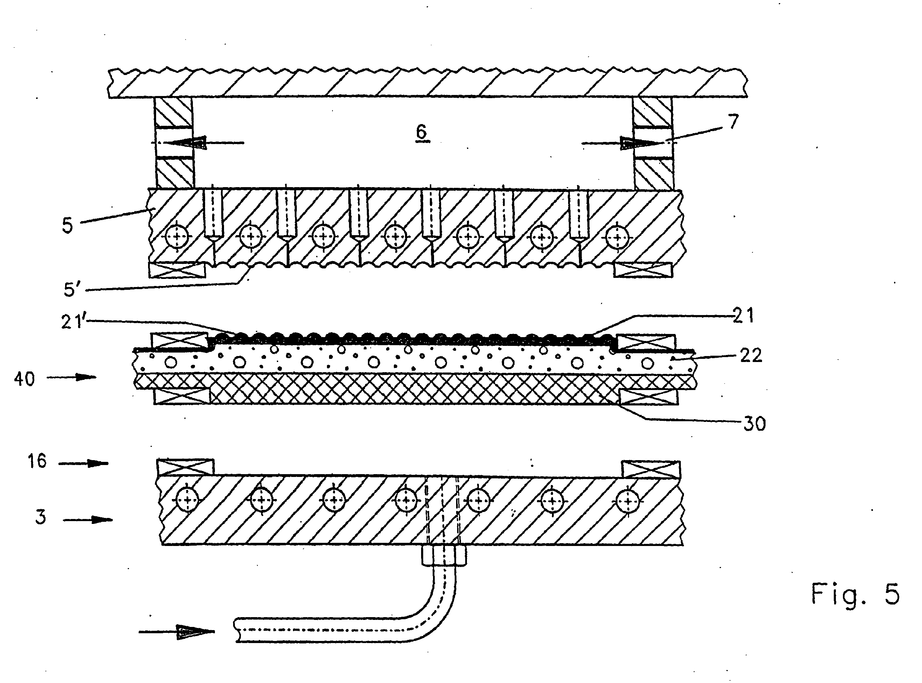

In entsprechender Weise zeigt Fig. 5 eine vergrößerte schematische Einzelheit des Ergebnisses aus der Durchführung der zweiten Formungsstufe gemäß Fig. 3. Die Deckschicht 20 behält ihre Oberflächenstruktur und Kontur, während ein Substratmaterial 30 auf ihre Rückseite geformt und laminiert wurde.

Es sei angemerkt, daß infolge des Formspaltes 23 einschließlich des Luftspaltes 24, der später das Substratmaterial 30 in der Stufe gemäß Fig. 3 aufnimmt, sichergestellt ist, daß der Träger 22 nicht zerquetscht oder verdichtet wird, so daß das fertig gestellte Formteil 40 seine "Weichfühl"-Eigenschaft beibehält, während es zugleich eine genau texturierte und/oder konfigurierte Oberflächenstruktur 21' aufweist.

Als Alternative zum Einführen einer Schicht aus Substratmaterial 30 in der zweiten Formungsstufe gemäß Fig. 3 ist es auch möglich, ein schäumendes Polymermaterial durch Sprühen, Gießen, Schütten oder Einspritzen des Materials in den Luftspalt 24 zwischen die Deckschicht 20 und die Formhälfte 11 einzuführen, um das Substrat 30 zu bilden. In jedem Fall wird das Substratmaterial 30 in die erforderliche dreidimensional konturierte Form gebracht und geformt, während es zugleich laminiert und zum Anhaften auf dem Träger 22 der Deckschicht 20 gebracht wird. Nach einer weiteren Alternative ist das Druckmedium selbst ein schäumendes Polymerharz, das in flüssiger Form in den Formspalt eingebracht wird, beispielsweise durch Injektion durch entsprechende Einspritzkanäle bei der Formstufe gemäß Fig. 2. Dieses kombiniert im Ergebnis die Stufen von Fig. 2 und Fig. 3 zu einer einzelnen Stufe. Da das in den Formspalt bei der Stufe gemäß Fig. 2 eingespritzte, schäumende Polymerharz zu schäumen beginnt und expandiert, erzeugt es einen entsprechenden Druck und dabei wirkt es als Druckmedium, das die Deckschicht 20 gegen die Oberfläche 5' in der Formstufe gemäß Fig. 2 drückt, wie es vorstehend beschrieben wurde. Wenn dann das schäumende Polymerharz abkühlt und erhärtet oder aushärtet, wobei es in Kontakt mit der temperierten Formhälfte 11 steht, bildet es direkt das Substrat 30 wie in Fig. 3 gezeigt. Dementsprechend erlaubt das Hinterschäumen das gesamte Formverfahren mit einem einzigen Öffnungs- und Schießzyklus durchzuführen.

Unabhängig von der besonderen Art der Anbringung und Formung des Substrats 30 werden das Substrat 30 und die Deckschicht 20 weiter abgekühlt und etwas verfestigt in der Stufe gemäß Fig. 3, was eine Folge des Kontaktes mit der Formhälfte 5 und der Formhälfte 11 ist, die mittels Kühlung temperiert werden. Wenn die Form zum Schluß geöffnet wird, wird das fertig gestellte Formteil 40, das schematisch in Fig. 5 dargestellt ist, aus der Form entfernt, nachdem die Vakuumaufbringung durch den Vakuumkanal 7 unterbrochen wurde.

Alternativ könnte auch die geformte Deckschicht 20 selbst ohne die Substratlaminierung gemäß Fig. 3 verwendet werden. Mit anderen Worten könnte das Verfahren nach der Vervollständigung gemäß Fig. 2 als abgeschlossen betrachtet werden.

Dann könnte die geformte und strukturierte Deckschicht mit irgend einem üblichen Substrat in üblicher Weise kombiniert oder in geeigneten Anwendungsfällen "wie sie ist" verwendet werden.

Bei weiteren optionalen Schritten gemäß der Erfindung kann nach der Vervollständigung in der zweiten Formstufe gemäß Fig. 3 eine weitere Deckschicht auf die entgegengesetzte Fläche des Substrats 30 geformt werden, wobei diese zusätzliche Deckschicht ebenfalls mit einer Oberflächenstruktur in ihrer Haut versehen werden kann. Dazu würde die Deckschicht in gleicher Weise wie die Deckschicht 20 vorerhitzt, so daß ihre Haut auf eine Temperatur oberhalb der Schmelztemperatur gebracht wird, während ihr Träger eine Temperatur unterhalb des Schmelzpunktes aufweist. Dann wird die vorerhitzte zusätzliche Deckschicht in die offene Form zwischen dem Substrat und der Unterform beziehungsweise der unteren Formhälfte 11 eingeführt, deren Oberfläche 11' ebenfalls mit einer Oberflächenstruktur versehen wurde. Darauf wird die Form mit einer genügend größeren Formspaltöffnung geschlossen, damit der Platz für die zusätzliche Deckschicht vorhanden ist. Druckluft wird den Vakuumbohrungen 9 zugeführt, während ein Vakuum über die Luftlöcher 14 aufgebracht wird, um im Wesentlichen die Anfangsformung und das Verfahren der Oberflächenstrukturierung gemäß Fig. 2 durchzuführen, wobei jedoch die Funktionen der oberen Formhälfte und der anderen Formhälfte miteinander vertauscht sind. In dieser Stufe läßt sich keine Blasformung in dem Umfang wie in der ersten Stufe erreichen, jedoch wird die eingeformte Oberflächenstruktur ausgebildet. Auf diese Weise kann ein fertiges Formteil hergestellt werden, das strukturierte Oberflächen der jeweiligen Haut auf entgegengesetzten Seiten aufweist.

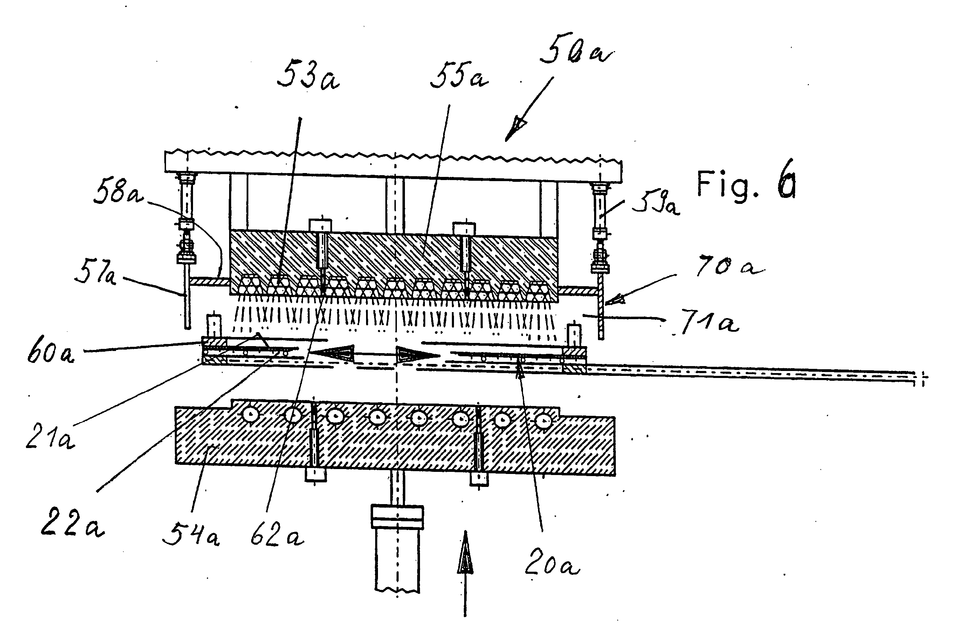

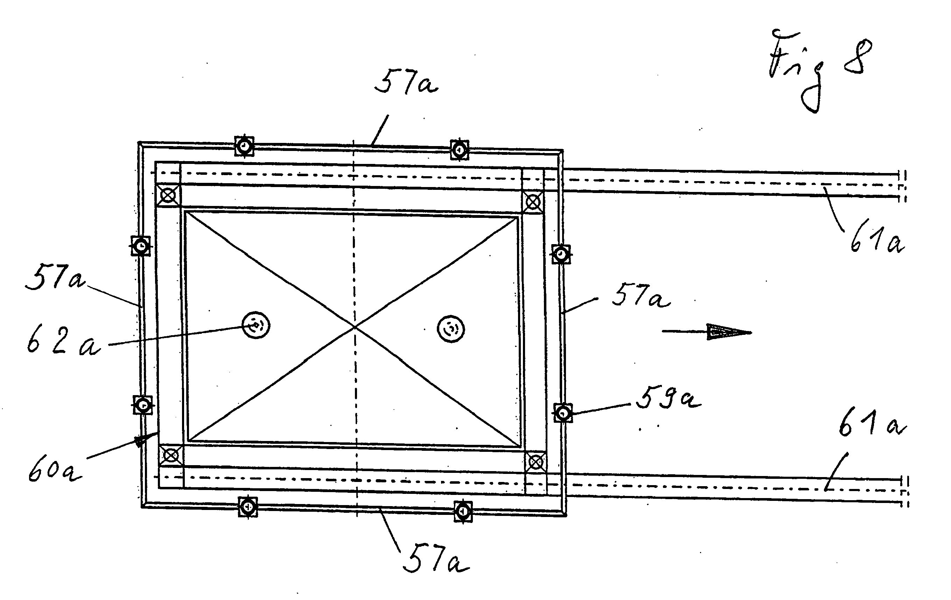

Eine abgewandelte Form der Heizeinrichtung ist in den Fig. 6 - 8 dargestellt. Grundsätzlich gleiche Teilen weisen dieselben Bezugszahlen und zusätzlich den Buchstabenindex a wie bei der Heizeinrichtung 50 gemäß Fig. 1 auf.

Auch die Heizeinrichtung 50a dient zum Erhitzen einer Deckschicht 20a, die aus einer nachfolgend als Haut 21a bezeichneten Dekorschicht und einer zweiten, als Träger für die stark erhitzte Haut 21a dienenden Trageschicht besteht.

Charakteristisch für die Heizeinrichtung 50a im Vergleich zu der anderen Heizeinrichtung 50 ist eine zusätzlich vorgesehene Schutzhaube 50a, die dafür sorgt, daß sich die aus zwei Lagen bestehende Deckschicht 20a beim Erhitzen in einer geschlossenen Kammer 71a befindet. Die Heizzone ist somit während des Heizvorganges gekapselt.

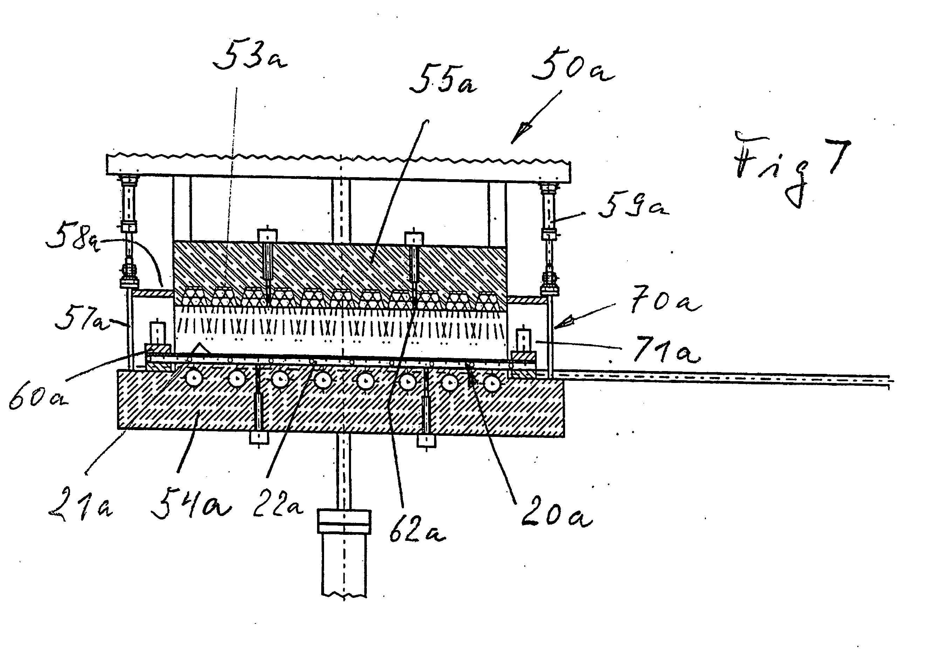

Wie bei dem ersten Ausführungsbeispiel sind unterschiedliche Heizelemente mit unterschiedlicher Zielsetzung vorgesehen. Dies sind gemäß Ausführungsbeispiel Heizstrahler und insbesondere Infrarotstrahler 53a an einem die Kammer 71a noch oben abschließenden Deckenelement 55a einerseits und eine Kontaktheizung mit einer Kontaktfläche in Gestalt einer Temperierplatte (54a) andererseits. Während des Heiz- oder Erwärmungsschrittes berührt die Temperierplatte (54a) die Deckschicht (20a) von unten. Die Schutzhaube 70a umfaßt Seitenwände 57a, die allseitig angeordnet sein können. Ferner sind gemäß dem in Fig. 7 dargestellten Ausführungsbeispiel auch noch Zwischenstücke 58a vorgesehen, die den freien Raum zwischen den Seitenwänden 57a und dem Deckenelement 55a überbrücken.

Wie aus einem Vergleich der Fig. 6 und 7 hervorgeht, sind die Zwischenstücke 58a starr mit dem Deckenelement 55a der Heizeinrichtung 50a verbunden. Die Seitenwände 57a sind relativ zu den Zwischenstücken 58a nach oben und unten bewegbar. Dadurch ist es möglich, die Kammer 71a zu öffnen und zu schließen. Um eine zweilagige oder aus zwei einzelnen Lagen bestehende Deckschicht 20a in der Kammer 71 anzuordnen, muß sie geöffnet werden. Um die Haut 21a im erforderlichen Umfang sowie gleichmäßig zu erwärmen beziehungsweise in einen teigig oder fast flüssigen Zustand zu erhitzen, werden die Seitenwände 57a der Schutzhaube 70a abgesenkt, bis die Kammer 71a geschlossen ist. Zum Entnehmen der Deckschicht 20a mit Hilfe des Spannrahmens 60a wird die Kammer 71a dann wieder geöffnet, so wie dies in Fig. 6 dargestellt ist.

Zum Heben und Senken der Seitenwände 57a der Schutzhaube 70a sind Antriebsmittel 59a vorgesehen, bei denen es sich um pneumatische oder hydraulische Antriebe handeln kann.

Aber nicht nur die Schutzhaube 70a beziehungsweise die während des Heizvorganges geschlossene Kammer 71a dienen zur Herstellung einer gleichmäßigen Temperaturverteilung, sondern auch zweckmäßigerweise vorgesehene Temperaturfühler 62a im Inneren der Kammer 71a. Mindestens zwei Temperaturfühler 62a sind zwischen den Infrarotstrahlern 53a angeordnet und mit Hilfe einer hier nicht näher interessierenden Steuerung in der Lage, gegebenenfalls verschiedene Heizstrahler zu drosseln oder deren Wirkung zu verstärken.

Von grundsätzlicher und allgemeiner Bedeutung ist, daß die Deckschicht 20a aus zwei Lagen 21a und 22a besteht. Die Schmelzpunkte der Werkstoffe dieser beiden Lagen 21a und 22a sind verschieden. Die eine, als Dekorschicht 21a dienende Lage weist einen im Vergleich niedrigeren Schmelzpunkt auf als die andere, als Träger 22a dienende Lage.

Ferner ist die Temperierplatte 54a vorgesehen und sorgt dafür, daß die als Träger 22a dienende Lage auf einer ausreichend niedrigen Temperatur während des Heizvorgangs gehalten wird, damit sie eine ausreichende Stabilität und Festigkeit zum Tragen und Transportieren der anderen Lage 21a trotz deren Erwärmung und Erweichung beibehält.

Der Erweichungsgrad der als Haut oder Dekorschicht dienenden Lage 21a kann entsprechend den Anforderungen unterschiedlich sein. Es muß eine thermoplastische Verbindung mit dem Träger 22a erfolgen und eine Oberflächenstrukturierung oder dergleichen durch einen Druck- und Prägevorgang muß grundsätzlich möglich sein. Sowohl die als Dekorschicht dienende Lage 21a als auch die als Träger dienende Lage 22a können Kunststoffolien sein.

Als Werkstoff für die Trageschicht 22a dient jedoch insbesondere ein chemisch vernetzter, geschlossenporiger Kunststoffschaum. Entweder ist dessen Erweichungstemperatur wesentlich höher ist als die der stark erhitzten Dekorschicht 21a oder die Temperatursteuerung für die Trageschicht 22a in der Heizeinrichtung 50a wird derart gewählt, daß die Trageschicht 22a eine ausreichende Stabilität und Festigkeit behält, um als Träger für die erweichte, teigige, zähflüssige oder schmelzflüssige Haut 21a zu dienen.

Die Temperatursteuerung in der Heizeinrichtung 50, 50a kann daher derart sein, daß die eine Lage 21, 21a auf eine Temperatur von 200° C (etwa 200° C) und die andere Lage 22, 22a auf eine Temperatur von 100° C (etwa 100° C) erwärmt wird. Die Temperierplatte 54, 54a hat dann vorzugsweise eine Temperatur von etwa 80° C bis 90° C.

Zum Verformen in der Vorrichtung 1 werden dann ein Tiefziehschritt und daraufhin nur Druck mit Hilfe eines Strömungsmediums verwendet. Ein Vakuum beziehungsweise Unterdruck wird in der Vorrichtung 1 erst dann angelegt, wenn die Haut 21, 21a ausreichend erhärtet ist, um ein Verrutschen der Haut aus der Kontur zu verhindern, und vorzugsweise erfolgt erst in einem weiteren Schritt das Hinterpressen mit einem Substrat von zum Beispiel 200° C heißem Polypropylen-Naturfaser-Gemisch.

Der Schaumstoff besitzt schließlich nicht nur eine Funktion als Trägerwerkstoff, sondern auch als Brücke bei dem Unterdruck in der Vorrichtung 1. Er trägt dazu bei, daß die Haut nicht in die lasergebohrten Bohrungsabschnitte 9B gesaugt wird.

Sehr wesentlich ist schließlich, daß mehrlagige Formteile und insbesondere Innenverkleidungsteile für Kraftfahrzeuge hergestellt werden können, wobei zunächst ein Halbfabrikat/Vorprodukt durch Tiefziehen und Hinterpressen mit einem Strömungsmedium, d.h. insbesondere mit Druckluft in einem Formspalt zwischen zwei Formhälften hergestellt werden kann und daß so dann auf das Halbfabrikat ein Substrat dadurch aufgebracht wird, daß der Formspalt mit dem Substratwerkstoff gefüllt wird, so daß das Halbfabrikat zur Herstellung des Endproduktes den Formhälften nicht entnommen werden muß.

## Patentansprüche

1. Verfahren zum Herstellen eines Formteiles (40) mit einer Prägung, Narbung oder dergleichen eingeformter Oberflächenstruktur (21') unter Verwendung einer Vorrichtung (1) zum Herstellen von Formteilen (40) mit einer Formhälfte (5) für die Oberseite des Formteiles (40), wobei die Oberfläche (5') der Formhälfte (5) ebenfalls eine eingeformte Oberflächenstruktur aufweist und gegenüber einer Oberfläche (11') einer zweiten Formhälfte (11) angeordnet ist, mit folgenden Schritten:
a) Verwendung einer Deckschicht (20), die eine Haut (21) aus einem thermoplastischen Werkstoff und einen Träger (22) aus einem Kunststoff-Schaumstoff umfasst;
b) Erhitzen der Deckschicht (20) durch Erhitzung der Haut (21) auf eine erste Temperatur, die gleich oder oberhalb der Schmelztemperatur des thermoplastischen Haut-Werkstoffes liegt, so dass die Haut (21) mindestens teigig zum Verformen wird und sich klebrig und thermoplastisch mit dem Träger (22) verbindet, und wobei der Träger (22) auf eine zweite Temperatur erwärmt wird, die unterhalb der Schmelztemperatur des aus Schaumstoff bestehenden Trägers (22) liegt;
c) Anordnen der Deckschicht (20) zwischen der einen Formhälfte (5) und der anderen Formhälfte (11), wobei die Haut (21) der einen Formhälfte (5) und der aus Schaumstoff bestehende Träger (22) der anderen Formhälfte (11) zugewandt sind, woraufhin zumindest eine der beiden Formhälften (5, 11) gegenüber der jeweils anderen Formhälfte mit der dazwischenliegenden Deckschicht (20) bewegt wird;
d) Formen der Deckschicht (20) und Verbringen der Haut (21) in eine direkte Anlage an die Oberfläche (5'), um in die Haut (21) eine eingeformte Oberflächenstruktur (21') zu formeln, die zur Struktur der Oberfläche (5') invers ist und
e) Abkühlen der Deckschicht (20) im Anschluss an Schritt d) und Auseinanderbewegen der Formhälften, wobei wenigstens eine der beiden Formenhälften (5, 11) gegenüber der anderen Formhälfte (5, 11) bewegt wird.

2. Verfahren nach Anspruch 1, **dadurch gekennzeichnet, dass** der Schritt b) so durchgeführt wird, dass das Material der Haut (21) aus einem festen Zustand in einen mindestens teilweise geschmolzenen, viskos-flüssigen Zustand überführt wird und dass das Material für den als Träger (22) dienenden Schaumstoff in einem vorzugsweise elastischen, verformbaren und zugleich festen Zustand verbleibt, und dass der Schritt d) so durchgeführt wird, dass das Material für die Haut 21 anfangs in einem mindestens angeschmolzenen, viskos-flüssigen Zustand vorliegt.

3. Verfahren nach Anspruch 2, **dadurch gekennzeichnet, dass** der Schritt d) das Einführen eines unter Druck stehenden Druckmediums in einen Luftspalt (24) zwischen dem aus Schaumstoff bestehenden Träger (22) und einer Oberfläche (11') der Vorrichtung (1) umfasst, so dass das Druckmedium den Träger (22) gleichförmig in Richtung auf eine andere Oberfläche (5') der Vorrichtung (1) drückt, wodurch die Haut (21) gleichförmig in direkte Anlage an die Oberfläche (5') gebracht wird, und wobei der Schritt d) weiter das Aufbringen eines Unterdruckes zwischen der Haut (21) und der Oberfläche (5') umfasst.

4. Verfahren nach Anspruch 1, **dadurch gekennzeichnet, dass** der Schritt d) das Einführen eines unter Druck stehenden Druckmittels in einen Luftspalt (24) zwischen dem Träger (22) und der Oberfläche (11') umfasst, so dass das Druckmedium den Träger (22) gleichförmig in Richtung auf die Oberfläche (5') drückt, um die Haut (21) in direkte Anlage an der Oberfläche (5') zu bringen, und dass Schritt d) ferner das Entfernen von Luft aus dem Raum zwischen der Haut (21) und der Oberfläche (5') umfasst.

5. Verfahren nach Anspruch 4, **dadurch gekennzeichnet, dass** das Entfernen von Luft ein passives Entlüften ist, das stattfindet, während das Druckmedium den Träger (22) in Richtung auf die Oberfläche (5') drückt.

6. Verfahren nach Anspruch 5, **dadurch gekennzeichnet, dass** nach dem passiven Entlüften ein Unterdruck zwischen der Oberfläche (5') und der Haut (21) aufgebracht wird.

7. Verfahren nach Anspruch 4, **dadurch gekennzeichnet, dass** das Entfernen von Luft das Aufbringen eines Unterdruckes zwischen der Oberfläche (5') und der
Haut (21) umfasst.

8. Verfahren nach Anspruch 7, **dadurch gekennzeichnet, dass** der Unterdruck 0,05 - 0,3 bar unter Atmosphärendruck beträgt.

9. Verfahren nach Anspruch 4, **dadurch gekennzeichnet, dass** das unter Druck stehende Druckmedium mit einem Druckbereich von 1 - 30 bar in den Luftspalt (24) eingeleitet und auf diesem Druck gehalten wird.

10. Verfahren nach Anspruch 1, **dadurch gekennzeichnet, dass** der Druck im Bereich von 5 - 20 bar liegt.

11. Verfahren nach Anspruch 4, **dadurch gekennzeichnet, dass** das unter Druck stehende Druckmedium Druckluft ist.

12. Verfahren nach Anspruch 4, **dadurch gekennzeichnet, dass** Schritt c) ferner das Ausbilden einer druckdichten Abdichtung zwischen dem Träger (22) und der Oberfläche (11') am Rand einer Formhälften (11) umfasst.

13. Verfahren nach Anspruch 4, **dadurch gekennzeichnet, dass** das unter Druck stehende Druckmedium ein schäumendes Polymerharz ist, das im Spalt (24) zwischen dem Träger (22) und der Oberfläche (11') einen Druck erzeugt, wenn das Harz expandiert und einen Schaum bildet.

14. Verfahren nach Anspruch 4, **dadurch gekennzeichnet, dass** Schritt c) ein mechanisches Verformen der Deckschicht (20) gegen die Oberfläche (11') und in Richtung auf die Oberfläche (5') umfasst, während wenigstens eine der beiden Formhälften (5, 11) relativ aufeinander zu bewegt wird, wobei das Einführen des unter Druck stehenden Druckmediums im Schritt d) eine Verformung der Deckschicht (20) zusätzlich zu der mechanischen Verformung bewirkt.

15. Verfahren nach Anspruch 1, **dadurch gekennzeichnet, dass** Schritt b) so durchgeführt wird, dass die erste Temperatur der Haut (21) im Bereich von 40° - 70° C höher ist als die zweite Temperatur des Trägers (22).

16. Verfahren nach Anspruch 1, **dadurch gekennzeichnet, dass** Schritt b) so durchgeführt wird, dass die erste Temperatur der Haut (21) im Bereich von 190° - 210° C und die zweite Temperatur des Trägers (22) im Bereich von 130° - 150° C liegen.

17. Verfahren nach Anspruch 1, **dadurch gekennzeichnet, dass** die Deckschicht (20) so orientiert ist, dass während aller Schritte die Haut (21) oben auf dem darunter liegenden Träger (22) angeordnet ist.

18. Verfahren nach Anspruch 1, **dadurch gekennzeichnet, dass** Schritt b) einen Kontakt des aus Schaumstoff bestehenden Trägers (22) mit einer Temperierplatte (54) umfasst und zum Erhitzen der Haut (21) Heizstrahler (52) verwendet werden.

19. Verfahren nach Anspruch 1, **dadurch gekennzeichnet, dass** die Formhälfte (5) und die Formhälfte (11) temperiert werden, um eine Temperatur der einen Oberfläche (5') und der anderen Oberfläche (11') im Bereich von 50° - 60° C aufrecht zu erhalten.

20. Verfahren nach Anspruch 1, **dadurch gekennzeichnet, dass** der Werkstoff für den Träger (22) ein im wesentlichen geschlossenzelliger sowie luftundurchlässiger Kunststoffschaum ist und das für die Haut (21) ein thermoplastischer Polyolefin-Werkstoff verwendet wird.

21. Verfahren nach Anspruch 20, **dadurch gekennzeichnet, dass** als Werkstoff für den Träger (22) ein Polymer-Material verwendet wird, dessen Schmelztemperatur von der des thermoplastischen Polyolefin verschieden ist.

22. Verfahren nach Anspruch 20, **dadurch gekennzeichnet, dass** das Material des Trägers (22) auch thermoplastisches Polyolefin umfasst.

23. Verfahren nach Anspruch 1, **dadurch gekennzeichnet, dass** das Material des aus Schaumstoff bestehenden Trägers (22) Polypropylenschaum umfasst und/oder dass das Material der Haut (21) einen Polypropylenfilm umfasst.

24. Verfahren nach Anspruch 1, **dadurch gekennzeichnet, dass** nach dem Schritt e) ein Substratmaterial (30) zwischen dem Träger (22) und der Oberfläche (11') eingeführt wird und dass dann wenigstens eine der beiden Formen (5, 11) in Richtung auf die andere Form bewegt wird, so dass die Oberfläche (11') gegen das Substratmaterial (30) drückt und es formt und das Substratmaterial (30) zum Anhaften an den Träger (22) bringt, um aus dem Substratmaterial ein geformtes Substrat zu bilden.

25. Verfahren nach Anspruch 24, **dadurch gekennzeichnet, dass** das Substratmaterial (30) eine vorerwärmte Schicht aus wenigstens einem Materialverbund aus der Gruppe Polypropylen und Naturfasern, Polypropylen und Polyethylenfasern sowie Polypropylen und Glasfasern ist.

26. Verfahren nach Anspruch 24, **dadurch gekennzeichnet, dass** das Substratmaterial (30) ein Polyurethanschaum ist.

27. Verfahren nach Anspruch 24, **dadurch gekennzeichnet, dass** das Einleiten des Substratmaterials (30) durch Einspritzen, Sprühen, Schütten oder Gießen des Substratmaterials in viskos-flüssigen Zustand erfolg.

28. Verfahren nach Anspruch 24, **dadurch gekennzeichnet, dass** Schritt d) das Einführen eines unter Druck stehenden Druckmittels in einen Spalt (24) in einer definierten Spaltgröße zwischen dem aus Schaumstoff bestehenden Träger (22) und einer Oberfläche (11') umfasst und dass das Einführen des Substratmaterials (30) in den Spalt (24) mit der definierten Spaltweite zwischen dem aus Schaumstoff bestehenden Träger (22) und der Oberfläche (11') erfolgt, der von dem Druckmedium in Schritt d) eingenommen wurde.

29. Verfahren nach Anspruch 1, **dadurch gekennzeichnet, dass** die eingeformte Oberflächenstruktur eine künstliche Ledernarbung, eine künstliche Holzmaserung, einen erhabenen Text, eine vertieften Text, ein erhabenes Logo, ein vertieftes Logo, ein geometrisch sich wiederholendes Muster von Vorsprüngen oder ein geometrisch sich wiederholendes Muster von Vertiefungen ist.

30. Verfahren zum Herstellen eines Formteiles (40) nach Anspruch 1, **dadurch gekennzeichnet, dass**
der Schritt d) das Ausbilden einer druckdichten Abdichtung zwischen dem Träger (22) und der Oberfläche (11') und Einführen von Druckluft mit einem Druck im Bereich von 1 - 30 bar in einen Spalt (24) zwischen dem Träger (22) und der Oberfläche (11') umfasst, um die Deckschicht (20) zu verformen und die Haut (21) gegen die Oberfläche (5') zu drücken und dadurch in die Haut (21) eine eingeformte Oberflächenstruktur (21') zu formen, bei der es sich um eine Umkehrung der Struktur der Oberfläche (5') handelt,
wobei der Raum zwischen der Haut (21) und der Oberfläche (5') entlüftet wird;
wobei ein Unterdruck zwischen der Haut (21) und der Oberfläche (5') erzeugt wird,
und anschließend wenigstens einer der beiden Formhälften (5, 11) relativ zu der anderen Formhälfte bewegt wird und
ein Substratmaterial (30) zwischen dem Träger (22) und der Oberfläche (11') eingeführt wird und anschließend wenigstens eine der beiden Formhälften (5, 11) relativ zu der anderen Formhälfte bewegt wird, so dass die Oberfläche (11') gegen das Substratmaterial (30) drückt und es formt und zum Anhaften an den Träger (22) bringt, wobei aus dem Substratmaterial ein geformtes Substrat gebildet wird.

## Claims

1. Method for forming a part (40) with an imprint, a grain or similar structural patterns on its surface (21') using a fixture (1) for forming parts (40) with a mould half (5) for the upper side of the formed part (40), whereby, the surface (5') of the mould half (5) also features a structural pattern on its surface and a second mould half (11) arranged opposite to a surface (11'), with the following steps:
a) Using a surface layer (20) that includes a film (21) made from a thermoplastic material and a support (22) made from a synthetic foam plastic material;
b) Heating the surface layer (20) by heating the film (21) to an initial temperature that is the same or more than that of the melting temperature of the thermoplastic material of the film, so that the film (21) is of a plastic consistency for forming and combines adhesively and thermoplastic to the support (22) and, whereby, the support (22) is heated to a second temperature that is less than the melting temperature of the support (22) made from foam plastic;
c) Arranging the surface layer (20) between one mould half (5) and the other mould half (11), whereby, the film (21) of one mould half (5) and the support (22) of the other made mould half (11), made from foam plastic, face each other, whereby, a minimum of one of the two mould halves (5, 11) is moved towards the other mould half with the intermediate surface layer (20);
d) Forming the surface layer (20) and placing the film (21) in direct contact on the surface (5') in order to form structural patterns on its surface (21') in the film (21) that is inverse to the structure of the surface (5') and
e) Cooling the surface layer (20) subsequently to Step d) and moving apart the mould halves, whereby, a minimum of one of the two mould halves (5, 11) is moved towards the other mould half (5, 11).

2. Method according to claim 1, **characterized in that** the Step b) is carried out so that the material of the film (21) is partly melted from a solid condition, is transferred in a viscous fluid state and that the material of the support (22) used as plastic foam preferably remains in a resilient state and, simultaneously, firm and can be formed and that the Step d) is carried out so that the material for the film (21) initially exists at least in a slightly melted, viscous fluid state.

3. Method according to claim 2, **characterized in that** the Step d) includes the introduction of a pressure medium into an air gap (24) under pressure between the support (22) made from plastic foam and a surface (11') of the fixture (1), so that the pressure medium of the support (22) uniformly presses in the direction of another surface (5') of the fixture (1), whereby, the film (21) is applied uniformly to the surface (5') in direct contact and, whereby, the Step d) also includes applying a vacuum between the film (21) and the surface (5').

4. Method according to claim 1, **characterized in that** the Step d) includes the introduction of a pressure medium into an air gap (24) under pressure between the support (22) and the surface (11') so that the pressure medium the support (22) uniformly presses in the direction of the surface (5'), in order to apply the film (21) to the surface (5') in direct contact and that Step d) also includes removing the air from the space between the film (21) and the surface (5').

5. Method according to claim 4, **characterized in that** the removal of air is passive ventilation that is carried out whilst the pressure medium presses the support (22) onto the surface (5') in the direction.

6. Method according to claim 5, **characterized in that**, after the passive ventilation, a vacuum is applied between the surface (5') and the film (21).

7. Method according to claim 4, **characterized in that**, when removing air, it includes a vacuum being applied between the surface (5') and the film (21).

8. Method according to claim 7, **characterized in that** the vacuum is 0.05 - 0.3 bar less than atmospheric pressure.

9. Method according to claim 4, **characterized in that** the pressurized pressure medium is introduced into the air gap (24) within a pressure range of 1 - 30 bar and is maintained at this pressure.

10. Method according to claim 1, **characterized in that** the pressure is within the range 5 - 20 bar.

11. Method according to claim 4, **characterized in that** the pressurized pressure medium is compressed air.

12. Method according to claim 4, **characterized in that** the Step c) also includes forming an airtight seal between the support (22) and the surface (11') at the edge of one mould half (11).

13. Method according to claim 4, **characterized in that** the pressurized pressure medium is a foaming polymer resin that generates a pressure in the gap (24) between the support (22) and the surface (11') when the resin expands and foam forms.

14. Method according to claim 4, **characterized in that** the Step c) includes mechanical deformation of the surface layer (20) against the surface (11') and in the direction of the surface (5'), whilst a minimum of one of the two mould halves (5, 11) is relatively moved on top of one another, whereby, the introduction of the pressurized pressure medium in the Step d) effects deformation of the surface layer (20), in addition to the mechanical deformation.

15. Method according to claim 1, **characterized in that** the Step b) is carried out so that the initial temperature of the film (21) is more than the second temperature of the support (22) within the range of 40° - 70° C.

16. Method according to claim 1, **characterized in that** the Step b) is carried out so that the initial temperature of the film (21) is within the range of 190° - 210° C and the second temperature of the support (22) within the range of 130° - 150° C.

17. Method according to claim 1, **characterized in that** the surface layer (20) is orientated so that during all steps, the film (21) is arranged on the top of the support (22) below.

18. Method according to claim 1, **characterized in that** the Step b) includes contact to a tempering plate (54) with the support (22) made from plastic foam and radiant heaters (52) are used to heat the film (21).

19. Method according to claim 1, **characterized in that** the mould half (5) and the mould half (11) are tempered in order to maintain a temperature within the range of 50° - 60° C of the one surface (5') and the other surface (11').

20. Method according to claim 1, **characterized in that** the material of the support (22) is fundamentally in a closed and airtight plastic foam cell and thermoplastic polyfin material is used for the support (22).

21. Method according to claim 20, **characterized in that** the material of the support (22) is a polymer material, the melting temperature of which differs from that of the thermoplastic polyfin.

22. Method according to claim 20, **characterized in that** the material of the support (22) also includes thermoplastic polyfin.

23. Method according to claim 1, **characterized in that** the material of the support (22) made from plastic foam includes polypropylene foam and/or the material of the film (21) includes a polypropylene film.

24. Method according to claim 1, **characterized in that**, after the Step e), a substrate material (30) is introduced between the support (22) and the surface (11') and that a minimum of one of the two moulds (5, 11) is moved in the direction of the other mould, so that the surface (11') presses against the substrate material (30) so that it adheres to the support (22), in order to form a formed substrate from the substrate material (30).

25. Method according to claim 24, **characterized in that** the substrate material (30) is a preheated layer of a minimum of a material compound from the group polypropylene and natural fibres, polypropylenes and polyethylene fibres and polypropylene and glass fibres.

26. Method according to claim 24, **characterized in that** the substrate material (30) is polyurethane foam.

27. Method according to claim 24, **characterized in that** the introduction of the substrate material (30) is carried out by injection, spraying, scattering or pouring the substrate material in the viscous fluid state.

28. Method according to claim 24, **characterized in that** the Step d) includes the introduction of a pressurized pressure medium into a gap (24) of a defined size of gap between the carrier (22) made from plastic foam and a surface (11') and that the introduction of the substrate material (30) into the gap (24) of the defined gap width between the carrier (22) made from plastic foam and the surface (11') is carried out using the pressure medium as has been assumed in Step d).

29. Method according to claim 1, **characterized in that** the formed structural patterns on its surface is an artificial leather grain, an artificial wood grain, a raised text, a recessed text, a raised logo, a recessed logo, a geometric repeating pattern of protrusions or a geometric repeating pattern of recesses.

30. Method for forming a part (40) according to claim 1, **characterized in that**
the Step d) includes forming an airtight seal between the support (22) and the surface (11') and introducing compressed air at a pressure in the range of 1 - 30 bar in a gap (24) between the support (22) and the surface (11') in order to form the surface layer (20) and press the film (21) against the surface (5') and, thereby, form a structural pattern on its surface (21') in the skin (21), whereby, it is inversion of the structure of the surface (5'),
whereby, the space between the film (21) and the surface (5') is ventilated; whereby, a vacuum is generated in the space between the film (21) and the surface (5'),
and, subsequently, a minimum of one of the two mould halves (5, 11) is moved relative to the other mould half and
a substrate material (30) is introduced between the support (22) and the surface (11') and, subsequently, a minimum of one of the two mould halves (5, 11) is moved relative to the other mould half so that the surface (11') presses against the substrate material (30) and it forms and adheres to the support (22), whereby, a formed substrate is formed from the substrate material.

## Revendications

1. Procédé pour fabriquer une pièce moulée (40) comportant un gaufrage, un grain ou une structure superficielle (21') thermoformée similaire en utilisant un dispositif (1) servant à fabriquer des pièces moulées (40) et comprenant une moitié (5) de moule pour le dessus de la pièce moulée (40), sachant que la surface (5') de la moitié (5) de moule présente elle aussi une structure superficielle conférée par moulage et qu'elle est disposée en face d'une surface (11') d'une seconde moitié (11) de moule, procédé passant par les étapes suivantes :
a) Utilisation d'une couche de couverture (20) comprenant une peau (21) qui provient d'un matériau thermoplastique et un support (22) qui provient d'un matériau mousse synthétique ;
b) Échauffement de la couche de couverture (20) en portant la peau (21) à une première température égale ou supérieure à la température de fusion du matériau thermoplastique de la peau, de sorte que la peau (21) devient au moins pâteuse pour la déformation et qu'elle s'unisse de manière collante et thermoplastique avec le support (22), et sachant que le support (22) est porté à une seconde température inférieure à celle à laquelle le support (22) en matériau mousse fond ;
c) Placement de la couche de couverture (20) entre la moitié (5) de moule et l'autre moitié (11) de moule, sachant que la peau (21) de la moitié (5) de moule et le support (22) en matériau mousse de l'autre moitié (11) de moule se font face, ce après quoi au moins l'une des deux moitiés (5, 11) de moule est déplacée par rapport à l'autre moitié de moule avec la couche de couverture (20) située entremis ;
d) Moulage de la couche de couverture (20) et amenée de la peau (21) en applique directe contre la surface (5') afin de mouler dans la peau (21) une structure superficielle (21') conférée au moule et qui est l'inverse de la structure que présente la surface (5'), et
e) Refroidissement de la couche de couverture (20) consécutivement à l'étape d), puis les moitiés de moule s'éloignent l'une de l'autre, sachant qu'au moins l'une des deux moitiés (5, 11) de moule se déplace par rapport à l'autre moitié (5, 11) de moule.

2. Procédé selon la revendication 1, **caractérisé en ce que** l'étape b) est exécutée de telle manière que le matériau de la peau (21) est transféré d'un état solide vers un état au moins en partie fondu, visqueux à liquide, et **en ce que** la matière du matériau mousse servant de support (22) demeure dans un état de préférence élastique, déformable et en même temps solide, et **en ce que** l'étape d) est exécutée de telle manière que la matière constitutive de la peau (21) se trouve au début dans un état au moins de commencement de fusion, un état visqueux à liquide.

3. Procédé selon la revendication 2, **caractérisé en ce que** l'étape d) comprend l'introduction d'un fluide sous pression dans un interstice (24) entre le support (22) composé du matériau mousse et une surface (11') du dispositif (1), de sorte que le fluide sous pression pousse le support (22) uniformément en direction d'une autre surface (5') du dispositif (1), ce qui amène la peau (21) uniformément en applique directe contre la surface (5'), et sachant que l'étape d) comprend ensuite l'application d'une dépression entre la peau (21) et la surface (5').

4. Procédé selon la revendication 1, **caractérisé en ce que** l'étape d) comprend l'introduction d'un fluide sous pression dans un interstice (24) entre le support (22) et la surface (11'), de sorte que le fluide sous pression pousse le support (22) en direction de la surface (5') afin d'amener la peau (21) en applique directe contre la surface (5'), et **en ce que** l'étape (d) comprend en outre l'évacuation de l'air présent dans la cavité formée par la peau (21) et la surface (5').

5. Procédé selon la revendication 4, **caractérisé en ce que** l'évacuation de l'air est une évacuation passive ayant lieu pendant que le fluide sous pression pousse le support (22) en direction de la surface (5').

6. Procédé selon la revendication 5, **caractérisé en ce qu'**après l'évacuation passive une dépression est générée entre la surface (5') et la peau (21).

7. Procédé selon la revendication 4, **caractérisé en ce que** l'enlèvement de l'air comprend la génération d'une dépression entre la surface (5') et la peau (21).

8. Procédé selon la revendication 7, **caractérisé en ce que** la dépression est inférieure de 0,05 à 0,3 bar à la pression atmosphérique.

9. Procédé selon la revendication 4, **caractérisé en ce que** le fluide sous pression est injecté avec une plage de pressions comprise entre 1 et 30 bars dans l'interstice (24) et maintenu dans cette plage.

10. Procédé selon la revendication 1, **caractérisé en ce que** la pression se situe dans une plage de 5 à 20 bars.

11. Procédé selon la revendication 4, **caractérisé en ce que** le fluide sous pression est de l'air comprimé.

12. Procédé selon la revendication 4, **caractérisé en ce que** l'étape c) comprend en outre la formation d'un joint étanche à la pression entre le support (22) et la surface (11') sur le bord d'une moitié (11) de moule.

13. Procédé selon la revendication 4, **caractérisé en ce que** le fluide sous pression est une résine polymère moussante générant une pression dans l'interstice (24) entre le support (22) et la surface (11') lorsque la résine entre en expansion et forme une mousse.

14. Procédé selon la revendication 4, **caractérisé en ce que** l'étape c) comprend une déformation mécanique de la couche de couverture (20) contre la surface (11') et en direction de la surface (5'), tandis qu'au moins l'une des deux moitiés de moule (5, 11) se déplace relativement à l'autre, sachant que l'introduction du fluide sous pression à l'étape d) provoque une déformation de la couche de couverture (20) en plus de la déformation mécanique.

15. Procédé selon la revendication 1, **caractérisé en ce que** l'étape b) est exécutée de telle sorte que la première température de la peau (21), située dans une plage de 40 à 70 °C, est supérieure à la seconde température du support (22).

16. Procédé selon la revendication 1, **caractérisé en ce que** l'étape b) est exécutée de telle manière que la première température de la peau (21) est comprise entre 190 et 210 °C et que la seconde température du support (22) est comprise entre 130 et 150 °C.

17. Procédé selon la revendication 1, **caractérisé en ce que** la touche de couverture (20) est orientée de telle manière que pendant toutes les étapes la peau (21) est disposée en haut sur le support (22) situé en dessous.

18. Procédé selon la revendication 1, **caractérisé en ce que** l'étape b) comprend une entrée en contact du support (22) composé de matériau mousse avec une plaque de thermostatisation (54), et que des dispositifs de chauffage radiants (52) sont utilisés pour échauffer la peau (21).

19. Procédé selon la revendication 1, **caractérisé en ce que** la moitié (5) de moule et la moitié (11) de moule sont thermostatisée afin de maintenir la température d'une surface (5') et de l'autre surface (11') dans la plage comprise entre 50 et 60 °C.

20. Procédé selon la revendication 1, **caractérisé en ce que** le matériau constitutif du support (22) est une mousse synthétique essentiellement à pores fermés et imperméable à l'air et que pour la peau (21) est utilisé un matériau thermoplastique à base de polyoléfine.

21. Procédé selon la revendication 20, **caractérisé en ce que** comme matériau du support (22) est utilisé un polymère dont la température de fusion n'est pas la même que celle de la polyoléfine thermoplastique.

22. Procédé selon la revendication 20, **caractérisé en ce que** la matière du support (22) comprend aussi une polyoléfine thermoplastique.

23. Procédé selon la revendication 1, **caractérisé en ce que** la matière du support (22) en matériau mousse comprend de la mousse de polypropylène et/ou **en ce que** la matière de la peau (21) comprend un film de polypropylène.

24. Procédé selon la revendication 1, **caractérisé en ce qu'**après l'étape e) une matière servant de surface support (30) est introduite entre le support (22) et la surface (11'), et **en ce qu'**au moins l'un des deux moules (5, 11) est déplacé en direction de l'autre moule de sorte que la surface (11') appuie contre la matière servant de surface support (30) et la moule, et conduit cette matière (30) servant de surface support à adhérer contre le support (22) afin de former une surface support moulée à partir du matériau de cette même surface.

25. Procédé selon la revendication 24, **caractérisé en ce que** la matière servant de surface support (30) est une couche préchauffée composée d'au moins une combinaison de matières issue du groupe polypropylène et fibres naturelles, polypropylène et fibres de polyéthylène ainsi que polypropylène et fibres de verre.

26. Procédé selon la revendication 24, **caractérisé en ce que** la matière servant de surface support (30) est une mousse de polyuréthane.

27. Procédé selon la revendication 24, **caractérisé en ce que** l'introduction de la matière (30) servant de surface support a lieu par injection, pulvérisation, déversement ou coulée de ladite matière se trouvant dans un état visqueux à liquide.

28. Procédé selon la revendication 24, **caractérisé en ce que** l'étape d) comprend l'introduction d'un moyen sous pression dans un interstice (24) d'une taille définie entre le support (22) en matériau mousse et une surface (11'), et **en ce que** l'introduction de la matière servant (30) de surface support dans l'interstice (24), présentant l'écartement défini, a lieu entre le support (22) composé de matériau mousse et la surface (11'), interstice que le fluide sous pression avait occupé à l'étape d).

29. Procédé selon la revendication 1, **caractérisé en ce que** la structure superficielle conférée au moule est un grain cuir artificiel, une madrure bois artificielle, un texte en relief, un texte en creux, un logo en relief, un logo en creux, un schéma géométrique répétitif de saillies ou un schéma géométrique répétitif de creux.

30. Procédé pour fabriquer une pièce moulée (40) selon la revendication 1, **caractérisé en ce que**
l'étape d) comprend la formation d'un joint étanche à la pression entre le support (22) et la surface (11'), et l'introduction d'air comprimé à une pression comprise entre 1 et 30 bars dans un interstice (24) situé entre le support (22) et la surface (11') afin de déformer la couche de couverture (20) et de pousser la peau (21) contre la surface (5'), et de former ainsi dans la peau (21) une structure superficielle (21') conférée au moule et qui est l'inverse de la structure que présente la surface (5') du moule,
sachant que l'air présent dans la cavité entre la peau (21) et la surface (5') est évacué ;
sachant qu'une dépression est générée entre la peau (21) et la surface (5'),
et qu'ensuite au moins l'une des deux moitiés (5, 11) du moule est déplacée relativement à l'autre moitié de moule et
sachant qu'une matière (30) servant de surface support est introduite entre le support (22) et la surface (11'), et qu'ensuite au moins l'une des deux moitiés (5, 11) du moule se déplace relativement à l'autre moitié de moule afin que la surface (11') pousse contre la matière (30) de la surface support et la moule, et la force à adhérer contre le support (22), faisant que la matière servant de surface support devient une surface support moulée.
